# EUROPEAN PATENT APPLICATION

(11) **EP 4 665 033 A1**
(43) Date of publication of application: **17.12.2025**
(21) Application number: 24762926.4
(22) Date of filing: 25.01.2024
(51) Int. Cl.: H04W 72/04, H04L 5/00

(54) **WIRELESS COMMUNICATION METHOD AND APPARATUS, DEVICE, AND STORAGE MEDIUM**

(30) Priority: 28.02.2023 CN 202310224695
(71) Applicant: Huawei Technologies Co., Ltd., Shenzhen, Guangdong 518129 (CN)
(72) Inventor: NIE, Jingjing, Shenzhen, Guangdong 518129 (CN); MA, Yunsi, Shenzhen, Guangdong 518129 (CN); RUAN, Wei, Shenzhen, Guangdong 518129 (CN); DING, Guozhi, Shenzhen, Guangdong 518129 (CN)
(74) Representative: Isarpatent
(86) International application number: PCT/CN2024/074035
(87) International publication number: WO 2024/179243

(57) **Abstract**

This application is applicable to the field of wireless network technologies, and provides a wireless communication method and apparatus, a device, and a storage medium. The method includes: receiving first signaling sent by a terminal, and determining a radio channel mode supported by the terminal, where the first signaling includes a first field, and the first field indicates the radio channel mode supported by the terminal; and sending second signaling to the terminal, where the second signaling includes a second field, a target channel mode is indicated by using the second field, the second signaling indicates the terminal to use the target channel mode when the terminal sends a packet, the second signaling is sent when it is detected that there is a subchannel subject to interference on an operating channel, and the target channel mode is a mode in the radio channel mode supported by the terminal. According to the technical solutions provided in this application, a quantity of radio channel modes that can be supported can be increased, thereby improving flexibility and scalability of the radio channel mode, and further expanding an application scope of a puncturing technology.

## Description

This application claims priority to Chinese Patent Application No. 202310224695.0, filed with the China National Intellectual Property Administration on February 28, 2023 and entitled "WIRELESS COMMUNICATION METHOD AND APPARATUS, DEVICE, AND STORAGE MEDIUM", which is incorporated herein by reference in its entirety.

### TECHNICAL FIELD

This application relates to the field of device control technologies, and in particular, to a wireless communication method and apparatus, a device, and a storage medium.

### BACKGROUND

With continuous development of wireless network technologies, a user has an increasingly high requirement for a transmission rate of a wireless network. To provide a higher bandwidth for the user, in an existing wireless network protocol, bandwidth resources of a plurality of channels may be bundled, to extend an operating bandwidth of the wireless network. However, when there is interference on a specific channel, normal use of the entire operating bandwidth is affected, and an operating channel can only fall back to a bandwidth of one channel to complete data transmission. Consequently, utilization of bandwidth resources in the wireless network is greatly reduced. Therefore, to resolve the foregoing problem, a puncturing technology emerges accordingly. The puncturing technology is specifically to shield a channel with interference, so that data transmission can be completed by using a bandwidth resource of another channel on the operating bandwidth, to improve the utilization of the bandwidth resources. Based on shielding different sub-bandwidths on the operating bandwidth, namely, corresponding to different puncturing patterns of the operating bandwidth, four radio channel modes are currently defined, to meet an existing wireless communication requirement.

However, in an existing wireless network technology, a wireless access device establishes a wireless communication connection to a terminal, two bits at a specified location in a frame structure are used to determine a radio channel mode supported by the terminal. A small quantity of puncturing patterns are supported, and flexibility and scalability are low, thereby narrowing an application scope of the puncturing technology. In addition, when the terminal sends a packet to the wireless access device, a radio channel mode used by the terminal is not limited. Consequently, this reduces not only a transmission rate in an uplink transmission process, but also an anti-interference capability in overload when the terminal sends the packet to the wireless access device.

### SUMMARY

Embodiments of this application provide a wireless communication method and apparatus, a device, and a computer-readable storage medium, to resolve the problem of few types of radio channel modes available, low flexibility and scalability when a wireless communication connection is established by using a puncturing technology in an existing wireless network technology. In addition, when a terminal sends a packet to a wireless access device, a channel mode of the terminal is not limited, where such limitation reduces a transmission rate and an anti-interference capability in an uplink transmission process.

According to a first aspect, an embodiment of this application provides a wireless communication method, applied to a wireless access device. The wireless communication method includes:
receiving first signaling sent by a terminal, and determining a radio channel mode supported by the terminal, where the first signaling includes a first field, and the first field indicates the radio channel mode supported by the terminal; and
sending second signaling to the terminal, where the second signaling includes a second field, a target channel mode is indicated by using the second field, the second signaling indicates the terminal to use the target channel mode when the terminal sends a packet, the second signaling is sent when it is detected that there is a subchannel subject to interference on an operating channel, and the target channel mode is a mode in the radio channel mode supported by the terminal.

Implementation of this embodiment of this application has the following beneficial effect: When the terminal establishes a wireless connection to the wireless access device, the terminal may send the first signaling to the wireless access device. The first signaling includes the first field. The radio channel mode supported by the terminal is determined by using the first field. The radio channel mode that can be supported is extended by using the first field, and a quantity of puncturing patterns is increased. When detecting that there is the subchannel subject to interference in a current communication scenario, the wireless access device may determine the subchannel subject to interference that needs to be shielded, and determine, from the radio channel mode supported by the terminal, the target channel mode in which the subchannel subject to interference is shielded. The wireless access device may send, to the terminal, the second signaling that is used to determine the target channel mode. When the packet is subsequently sent between the wireless access device and the terminal, data is transmitted by using the determined target channel mode, to effectively use a bandwidth resource on the operating channel. In comparison with an existing wireless communication technology, in this application, not only two bits specified in a frame structure are used to determine the target channel mode supported by the terminal, but also the first field and an original field are added to the first signaling to jointly determine the radio channel mode supported by the terminal. This increases a quantity of radio channel modes that can be defined, and increases a quantity of radio channel modes that are determined by using the first field, and scalability of a radio channel mode newly added in a subsequent wireless protocol development process can also be facilitated, thereby greatly improving flexibility and scalability of application of a puncturing technology, and expanding an application scope of the puncturing technology. In addition, after determining the target channel mode, the wireless access device may send the second signaling to the terminal, and indicate, by using the second signaling, that the terminal needs to use the target channel mode when the terminal sends the packet. Therefore, a channel mode of the terminal in an uplink transmission process is limited, thereby increasing a transmission rate and an anti-interference capability of packet sending in the uplink transmission process.

In a possible implementation of the first aspect, before the sending second signaling to the terminal, the method further includes:
an interference detection unit, configured to: if detecting that there is the subchannel subject to interference on the operating channel, determine the target channel mode based on the subchannel subject to interference and the radio channel mode supported by the terminal.

In a possible implementation of the first aspect, the first signaling is a beacon frame, an association request frame, an association response frame, a probe request frame, or a probe response frame.

In a possible implementation of the first aspect, the second signaling is a preamble puncturing action (Preamble Puncturing Action) frame.

In a possible implementation of the first aspect, the second signaling indicates the wireless access device to use the target channel mode when the wireless access device sends a packet.

In a possible implementation of the first aspect, the first signaling further includes a third field, the first field is used to determine a first channel mode set supported by the terminal, and the third field is used to determine a second channel mode set supported by the terminal.

In a possible implementation of the first aspect, each bit in the first field corresponds to one first channel mode in the first channel mode set, and each bit in the third field corresponds to one second channel mode in the second channel mode set.

In a possible implementation of the first aspect, the following is included:

When a first bit in the first field is a first value, it indicates that the terminal supports puncturing an 80 MHz operating channel, and punctured channels are a secondary 20 MHz channel on a primary 40 MHz channel and any 20 MHz channel on a secondary 40 MHz channel;
when a second bit in the first field is a first value, it indicates that the terminal supports puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when a third bit in the first field is a first value, it indicates that the terminal supports puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when a fourth bit in the first field is a first value, it indicates that the terminal supports puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3.

In a possible implementation of the first aspect, the following is included:

When the second field in the second signaling is a first numerical range, it indicates that the target channel mode is a first channel mode in the first channel mode set; or
when the second field in the second signaling is a second numerical range, it indicates that the target channel mode is a second channel mode in the second channel set.

In a possible implementation of the first aspect, the following is included:

When the second field in the second signaling is a third value, it indicates that the target channel mode is puncturing an 80 MHz operating channel, and punctured channels are a secondary 20 MHz channel on a primary 40 MHz channel and any 20 MHz channel on a secondary 40 MHz channel;
when the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3, where
the third value to the sixth value fall within the first numerical range.

In a possible implementation of the first aspect, the operating channel includes N available subchannels, the first field includes N bits, each bit is used to determine whether the terminal supports shielding the available subchannel corresponding to the bit, and N is a positive integer greater than 2.

In a possible implementation of the first aspect, when any bit in the first field is a first value, it indicates that the terminal supports shielding the available subchannel corresponding to the bit.

In a possible implementation of the first aspect, the second field in the second signaling includes N bits, and each bit corresponds to one available subchannel on one operating channel; and
when a bit in the second field is a first value, it indicates that the available subchannel corresponding to the bit in the target channel mode is a non-punctured channel; or
when a bit in the second field is a second value, it indicates that the available subchannel corresponding to the bit in the target channel mode is a punctured channel.

In a possible implementation of the first aspect, the first field further includes a first indication bit, and the first indication bit is used to determine a first bandwidth granularity for dividing the operating channel for an available subchannel.

In a possible implementation of the first aspect, the following is included:

When the first indication bit is a first value, it indicates that the first bandwidth granularity is 40 MHz; or
when the first indication bit is a second value, it indicates that the first bandwidth granularity is 20 MHz.

In a possible implementation of the first aspect, the second field further includes a second indication bit, and the second indication bit is used to determine a second bandwidth granularity of the available subchannel in the target channel mode.

In a possible implementation of the first aspect, the following is included:
When the second indication bit is a first value, it indicates that the second bandwidth granularity is 40 MHz; or
when the second indication bit is a second value, it indicates that the second bandwidth granularity is 20 MHz.

In a possible implementation of the first aspect, after the sending second signaling to the terminal, the method further includes:
sending a first packet to the terminal, where the first packet is generated based on the target communication mode; and/or
receiving a second packet sent by the terminal, where the second packet is generated by the terminal based on the target communication mode.

According to a second aspect, an embodiment of this application provides a wireless communication apparatus. The wireless communication apparatus includes:
a first signaling receiving unit, configured to receive first signaling sent by a terminal, and determine a radio channel mode supported by the terminal, where the first signaling includes a first field, and the first field indicates the radio channel mode supported by the terminal; and
a second signaling sending unit, configured to send second signaling to the terminal, where the second signaling includes a second field, a target channel mode is indicated by using the second field, the second signaling indicates the terminal to use the target channel mode when the terminal sends a packet, the second signaling is sent when it is detected that there is a subchannel subject to interference on an operating channel, and the target channel mode is a mode in the radio channel mode supported by the terminal.

In a possible implementation of the second aspect, the wireless communication apparatus further includes:
an interference detection unit, configured to: if detecting that there is the subchannel subject to interference on the operating channel, determine the target channel mode based on the subchannel subject to interference and the radio channel mode supported by the terminal.

In a possible implementation of the second aspect, the first signaling is a beacon frame, an association request frame, an association response frame, a probe request frame, or a probe response frame.

In a possible implementation of the second aspect, the second signaling is a preamble puncturing action (Preamble Puncturing Action) frame.

In a possible implementation of the second aspect, the second signaling indicates a wireless access device to use the target channel mode when the wireless access device sends a packet.

In a possible implementation of the second aspect, the first signaling further includes a third field, the first field is used to determine a first channel mode set supported by the terminal, and the third field is used to determine a second channel mode set supported by the terminal.

In a possible implementation of the second aspect, each bit in the first field corresponds to one first channel mode in the first channel mode set, and each bit in the third field corresponds to one second channel mode in the second channel mode set.

In a possible implementation of the second aspect, the following is included:

When a first bit in the first field is a first value, it indicates that the terminal supports puncturing an 80 MHz operating channel, and punctured channels are a secondary 20 MHz channel on a primary 40 MHz channel and any 20 MHz channel on a secondary 40 MHz channel;
when a second bit in the first field is a first value, it indicates that the terminal supports puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when a third bit in the first field is a first value, it indicates that the terminal supports puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when a fourth bit in the first field is a first value, it indicates that the terminal supports puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3.

In a possible implementation of the second aspect, the following is included:
When the second field in the second signaling is a first numerical range, it indicates that the target channel mode is a first channel mode in the first channel mode set; or
when the second field in the second signaling is a second numerical range, it indicates that the target channel mode is a second channel mode in the second channel set.

In a possible implementation of the second aspect, the following is included:
When the second field in the second signaling is a third value, it indicates that the target channel mode is puncturing an 80 MHz operating channel, and punctured channels are a secondary 20 MHz channel on a primary 40 MHz channel and any 20 MHz channel on a secondary 40 MHz channel;
when the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3, where
the third value to the sixth value fall within the first numerical range.

In a possible implementation of the second aspect, the operating channel includes N available subchannels, the first field includes N bits, each bit is used to determine whether the terminal supports shielding the available subchannel corresponding to the bit, and N is a positive integer greater than 2.

In a possible implementation of the second aspect, when any bit in the first field is a first value, it indicates that the terminal supports shielding the available subchannel corresponding to the bit.

In a possible implementation of the second aspect, the second field in the second signaling includes N bits, and each bit corresponds to one available subchannel on one operating channel; and
when a bit in the second field is a first value, it indicates that the available subchannel corresponding to the bit in the target channel mode is a non-punctured channel; or
when a bit in the second field is a second value, it indicates that the available subchannel corresponding to the bit in the target channel mode is a punctured channel.

In a possible implementation of the second aspect, the first field further includes a first indication bit, and the first indication bit is used to determine a first bandwidth granularity for dividing the operating channel for an available subchannel.

In a possible implementation of the second aspect, the following is included:
When the first indication bit is a first value, it indicates that the first bandwidth granularity is 40 MHz; or
when the first indication bit is a second value, it indicates that the first bandwidth granularity is 20 MHz.

In a possible implementation of the second aspect, the second field further includes a second indication bit, and the second indication bit is used to determine a second bandwidth granularity of the available subchannel in the target channel mode.

In a possible implementation of the second aspect, the following is included:
When the second indication bit is a first value, it indicates that the second bandwidth granularity is 40 MHz; or
when the second indication bit is a second value, it indicates that the second bandwidth granularity is 20 MHz.

In a possible implementation of the second aspect, the wireless communication apparatus further includes:
a first packet sending unit, configured to send a first packet to the terminal, where the first packet is generated based on the target communication mode; and/or
a second packet receiving unit, configured to receive a second packet sent by the terminal, where the second packet is generated by the terminal based on the target communication mode.

According to a third aspect, this application provides a wireless communication method, applied to a terminal. The wireless communication method includes:
sending first signaling to a wireless access device, where the first signaling includes a first field, and the first field indicates a radio channel mode supported by the terminal; and
receiving second signaling sent by the wireless access device, where the second signaling includes a second field, a target channel mode is indicated by using the second field, the second signaling indicates the terminal to use the target channel mode when the terminal sends a packet, the second signaling is sent when the wireless access device detects that there is a subchannel subject to interference on an operating channel, and the target channel mode is a mode in the radio channel mode supported by the terminal.

In a possible implementation of the third aspect, the first signaling is a beacon frame, an association request frame, an association response frame, a probe request frame, or a probe response frame.

In a possible implementation of the third aspect, the second signaling is a preamble puncturing action (Preamble Puncturing Action) frame.

In a possible implementation of the third aspect, the second signaling indicates the wireless access device to use the target channel mode when the wireless access device sends a packet.

In a possible implementation of the third aspect, the first signaling further includes a third field, the first field is used to determine a first channel mode set supported by the terminal, and the third field is used to determine a second channel mode set supported by the terminal.

In a possible implementation of the third aspect, each bit in the first field corresponds to one first channel mode in the first channel mode set, and each bit in the third field corresponds to one second channel mode in the second channel mode set.

In a possible implementation of the third aspect, the following is included:

When a first bit in the first field is a first value, it indicates that puncturing of an 80 MHz operating channel is supported, and punctured channels are a secondary 20 MHz channel on a primary 40 MHz channel and any 20 MHz channel on a secondary 40 MHz channel;
when a second bit in the first field is a first value, it indicates that puncturing of a 160 MHz operating channel is supported, punctured channels are a secondary 20 MHz channel on a primary 40 MHz channel on a primary 80 MHz channel and P 20 MHz channels on a secondary 80 MHz channel, and P is any integer in 0 to 3;
when a third bit in the first field is a first value, it indicates that puncturing of a 160 MHz operating channel is supported, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when a fourth bit in the first field is a first value, it indicates that puncturing of a 160 MHz operating channel is supported, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3.

In a possible implementation of the third aspect, the following is included:
When the second field in the second signaling is a first numerical range, it indicates that the target channel mode is a first channel mode in the first channel mode set; or
when the second field in the second signaling is a second numerical range, it indicates that the target channel mode is a second channel mode in the second channel set.

In a possible implementation of the third aspect, the following is included:
When the second field in the second signaling is a third value, it indicates that the target channel mode is puncturing an 80 MHz operating channel, and punctured channels are a secondary 20 MHz channel on a primary 40 MHz channel and any 20 MHz channel on a secondary 40 MHz channel;
when the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3, where
the third value to the sixth value fall within the first numerical range.

In a possible implementation of the third aspect, the operating channel includes N available subchannels, the first field includes N bits, each bit is used to determine whether the terminal supports shielding the available subchannel corresponding to the bit, and N is a positive integer greater than 2.

In a possible implementation of the third aspect, when any bit in the first field is a first value, it indicates that the terminal supports shielding the available subchannel corresponding to the bit.

In a possible implementation of the third aspect, the second field in the second signaling includes N bits, and each bit corresponds to one available subchannel on one operating channel; and
when a bit in the second field is a first value, it indicates that the available subchannel corresponding to the bit in the target channel mode is a non-punctured channel; or
when a bit in the second field is a second value, it indicates that the available subchannel corresponding to the bit in the target channel mode is a punctured channel.

In a possible implementation of the third aspect, the first field further includes a first indication bit, and the first indication bit is used to determine a first bandwidth granularity for dividing the operating channel for an available subchannel.

In a possible implementation of the third aspect, the following is included:
When the first indication bit is a first value, it indicates that the first bandwidth granularity is 40 MHz; or
when the first indication bit is a second value, it indicates that the first bandwidth granularity is 20 MHz.

In a possible implementation of the third aspect, the second field further includes a second indication bit, and the second indication bit is used to determine a second bandwidth granularity of the available subchannel in the target channel mode.

In a possible implementation of the third aspect, the following is included:
When the second indication bit is a first value, it indicates that the second bandwidth granularity is 40 MHz; or
when the second indication bit is a second value, it indicates that the second bandwidth granularity is 20 MHz.

In a possible implementation of the third aspect, after the establishing the wireless communication link based on the target channel mode in response to the second signaling, the method further includes:
receiving a first packet sent by the wireless access device, where the first packet is generated by the wireless access device based on the target communication mode; and/or
sending a second packet to the wireless access device, where the second packet is generated by the terminal based on the target communication mode.

According to a fourth aspect, this application provides a wireless communication apparatus. The wireless communication apparatus includes:
a first signaling sending unit, configured to send first signaling to a wireless access device, where the first signaling includes a first field, and the first field indicates a radio channel mode supported by a terminal; and
a second signaling receiving unit, configured to receive second signaling sent by the wireless access device, where the second signaling includes a second field, a target channel mode is indicated by using the second field, the second signaling indicates the terminal to use the target channel mode when the terminal sends a packet, the second signaling is sent when the wireless access device detects that there is a subchannel subject to interference on an operating channel, and the target channel mode is a mode in the radio channel mode supported by the terminal.

In a possible implementation of the fourth aspect, the first signaling is a beacon frame, an association request frame, an association response frame, a probe request frame, or a probe response frame.

In a possible implementation of the fourth aspect, the second signaling is a preamble puncturing action (Preamble Puncturing Action) frame.

In a possible implementation of the fourth aspect, the second signaling indicates the wireless access device to use the target channel mode when the wireless access device sends a packet.

In a possible implementation of the fourth aspect, the first signaling further includes a third field, the first field is used to determine a first channel mode set supported by the terminal, and the third field is used to determine a second channel mode set supported by the terminal.

In a possible implementation of the fourth aspect, each bit in the first field corresponds to one first channel mode in the first channel mode set, and each bit in the third field corresponds to one second channel mode in the second channel mode set.

In a possible implementation of the fourth aspect, the following is included:

When a first bit in the first field is a first value, it indicates that puncturing of an 80 MHz operating channel is supported, and punctured channels are a secondary 20 MHz channel on a primary 40 MHz channel and any 20 MHz channel on a secondary 40 MHz channel;
when a second bit in the first field is a first value, it indicates that puncturing of a 160 MHz operating channel is supported, punctured channels are a secondary 20 MHz channel on a primary 40 MHz channel on a primary 80 MHz channel and P 20 MHz channels on a secondary 80 MHz channel, and P is any integer in 0 to 3;
when a third bit in the first field is a first value, it indicates that puncturing of a 160 MHz operating channel is supported, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when a fourth bit in the first field is a first value, it indicates that puncturing of a 160 MHz operating channel is supported, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3.

In a possible implementation of the fourth aspect, the following is included:
When the second field in the second signaling is a first numerical range, it indicates that the target channel mode is a first channel mode in the first channel mode set; or
when the second field in the second signaling is a second numerical range, it indicates that the target channel mode is a second channel mode in the second channel set.

In a possible implementation of the fourth aspect, the following is included:
When the second field in the second signaling is a third value, it indicates that the target channel mode is puncturing an 80 MHz operating channel, and punctured channels are a secondary 20 MHz channel on a primary 40 MHz channel and any 20 MHz channel on a secondary 40 MHz channel;
when the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3, where
the third value to the sixth value fall within the first numerical range.

In a possible implementation of the fourth aspect, the operating channel includes N available subchannels, the first field includes N bits, each bit is used to determine whether the terminal supports shielding the available subchannel corresponding to the bit, and N is a positive integer greater than 2.

In a possible implementation of the fourth aspect, when any bit in the first field is a first value, it indicates that the terminal supports shielding the available subchannel corresponding to the bit.

In a possible implementation of the fourth aspect, the second field in the second signaling includes N bits, and each bit corresponds to one available subchannel on one operating channel; and
when a bit in the second field is a first value, it indicates that the available subchannel corresponding to the bit in the target channel mode is a non-punctured channel; or
when a bit in the second field is a second value, it indicates that the available subchannel corresponding to the bit in the target channel mode is a punctured channel.

In a possible implementation of the fourth aspect, the first field further includes a first indication bit, and the first indication bit is used to determine a first bandwidth granularity for dividing the operating channel for an available subchannel.

In a possible implementation of the fourth aspect, the following is included:
When the first indication bit is a first value, it indicates that the first bandwidth granularity is 40 MHz; or
when the first indication bit is a second value, it indicates that the first bandwidth granularity is 20 MHz.

In a possible implementation of the fourth aspect, the second field further includes a second indication bit, and the second indication bit is used to determine a second bandwidth granularity of the available subchannel in the target channel mode.

In a possible implementation of the fourth aspect, the following is included:
When the second indication bit is a first value, it indicates that the second bandwidth granularity is 40 MHz; or
when the second indication bit is a second value, it indicates that the second bandwidth granularity is 20 MHz.

In a possible implementation of the fourth aspect, the wireless communication apparatus further includes:
a first packet receiving unit, configured to receive a first packet sent by the wireless access device, where the first packet is generated by the wireless access device based on the target communication mode; and/or
a second packet receiving unit, configured to send a second packet to the wireless access device, where the second packet is generated by the terminal based on the target communication mode.

According to a fifth aspect, an embodiment of this application provides an electronic device. The electronic device includes a memory, a processor, and a computer program that is stored in the memory and that can be run on the processor. When executing the computer program, the processor implements the wireless communication method according to any one of the possible implementations in the first aspect, or implements the wireless communication method according to any one of the possible implementations in the third aspect.

According to a sixth aspect, an embodiment of this application provides a computer-readable storage medium. The computer-readable storage medium stores a computer program. When the computer program is executed by a processor, the processor implements the wireless communication method according to any one of the possible implementations in the first aspect, or implements the wireless communication method according to any one of the possible implementations in the third aspect.

According to a seventh aspect, an embodiment of this application provides a computer program product. When the computer program product is run on an electronic device, the electronic device is enabled to perform the wireless communication method according to any one of the possible implementations in the first aspect, or implement the wireless communication method according to any one of the possible implementations in the third aspect.

According to an eighth aspect, an embodiment of this application provides a chip system. The chip system includes a processor. The processor is coupled to a memory, and the processor executes a computer program stored in the memory, to implement the wireless communication method according to any one of the possible implementations in the first aspect, or implement the wireless communication method according to any one of the possible implementations in the third aspect.

According to a ninth aspect, an embodiment of this application provides a wireless communication method, applied to a wireless communication system. The wireless communication system includes a wireless access device and at least one terminal. The wireless communication method includes:

The terminal sends first signaling to the wireless access device;
the wireless access device determines a radio channel mode supported by the terminal, where the first signaling includes a first field, and the first field indicates the radio channel mode supported by the terminal; and
the wireless access device sends second signaling to the terminal, where the second signaling includes a second field, a target channel mode is indicated by using the second field, the second signaling indicates the terminal to use the target channel mode when the terminal sends a packet, the second signaling is sent when it is detected that there is a subchannel subject to interference on an operating channel, and the target channel mode is a mode in the radio channel mode supported by the terminal.

In a possible implementation of the ninth aspect, before that the wireless access device sends second signaling to the terminal, the method further includes:
If detecting that there is the subchannel subject to interference on the operating channel, the wireless access device determines the target channel mode based on the subchannel subject to interference and the radio channel mode supported by the terminal.

In a possible implementation of the ninth aspect, the first signaling is a beacon frame, an association request frame, an association response frame, a probe request frame, or a probe response frame.

In a possible implementation of the ninth aspect, the second signaling is a preamble puncturing action (Preamble Puncturing Action) frame.

In a possible implementation of the ninth aspect, the second signaling indicates the wireless access device to use the target channel mode when the wireless access device sends a packet.

In a possible implementation of the ninth aspect, the first signaling further includes a third field, the first field is used to determine a first channel mode set supported by the terminal, and the third field is used to determine a second channel mode set supported by the terminal.

In a possible implementation of the ninth aspect, each bit in the first field corresponds to one first channel mode in the first channel mode set, and each bit in the third field corresponds to one second channel mode in the second channel mode set.

In a possible implementation of the ninth aspect, the following is included:
When a first bit in the first field is a first value, it indicates that the terminal supports puncturing an 80 MHz operating channel, and punctured channels are a secondary 20 MHz channel on a primary 40 MHz channel and any 20 MHz channel on a secondary 40 MHz channel;
when a second bit in the first field is a first value, it indicates that the terminal supports puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when a third bit in the first field is a first value, it indicates that the terminal supports puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when a fourth bit in the first field is a first value, it indicates that the terminal supports puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3.

In a possible implementation of the ninth aspect, the following is included:
When the second field in the second signaling is a first numerical range, it indicates that the target channel mode is a first channel mode in the first channel mode set; or
when the second field in the second signaling is a second numerical range, it indicates that the target channel mode is a second channel mode in the second channel set.

In a possible implementation of the ninth aspect, the following is included:
When the second field in the second signaling is a third value, it indicates that the target channel mode is puncturing an 80 MHz operating channel, and punctured channels are a secondary 20 MHz channel on a primary 40 MHz channel and any 20 MHz channel on a secondary 40 MHz channel;
when the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3, where
the third value to the sixth value fall within the first numerical range.

In a possible implementation of the ninth aspect, the operating channel includes N available subchannels, the first field includes N bits, each bit is used to determine whether the terminal supports shielding the available subchannel corresponding to the bit, and N is a positive integer greater than 2.

In a possible implementation of the ninth aspect, when any bit in the first field is a first value, it indicates that the terminal supports shielding the available subchannel corresponding to the bit.

In a possible implementation of the ninth aspect, the second field in the second signaling includes N bits, and each bit corresponds to one available subchannel on one operating channel; and
when a bit in the second field is a first value, it indicates that the available subchannel corresponding to the bit in the target channel mode is a non-punctured channel; or
when a bit in the second field is a second value, it indicates that the available subchannel corresponding to the bit in the target channel mode is a punctured channel.

In a possible implementation of the ninth aspect, the first field further includes a first indication bit, and the first indication bit is used to determine a first bandwidth granularity for dividing the operating channel for an available subchannel.

In a possible implementation of the ninth aspect, the following is included:
When the first indication bit is a first value, it indicates that the first bandwidth granularity is 40 MHz; or
when the first indication bit is a second value, it indicates that the first bandwidth granularity is 20 MHz.

In a possible implementation of the ninth aspect, the second field further includes a second indication bit, and the second indication bit is used to determine a second bandwidth granularity of the available subchannel in the target channel mode.

In a possible implementation of the ninth aspect, the following is included:
When the second indication bit is a first value, it indicates that the second bandwidth granularity is 40 MHz; or
when the second indication bit is a second value, it indicates that the second bandwidth granularity is 20 MHz.

In a possible implementation of the ninth aspect, after that the wireless access device sends second signaling to the terminal, the method further includes:
The wireless access device sends a first packet to the terminal, where the first packet is generated based on the target communication mode; and/or
the terminal sends a second packet to the wireless access device, where the second packet is generated by the terminal based on the target communication mode.

According to a tenth aspect, an embodiment of this application provides a wireless communication system. The wireless communication system includes a wireless access device and at least one terminal.

The terminal sends first signaling to the wireless access device;
the wireless access device determines a radio channel mode supported by the terminal, where the first signaling includes a first field, and the first field indicates the radio channel mode supported by the terminal; and
the wireless access device sends second signaling to the terminal, where the second signaling includes a second field, a target channel mode is indicated by using the second field, the second signaling indicates the terminal to use the target channel mode when the terminal sends a packet, the second signaling is sent when it is detected that there is a subchannel subject to interference on an operating channel, and the target channel mode is a mode in the radio channel mode supported by the terminal.

In a possible implementation of the tenth aspect, before that the wireless access device sends second signaling to the terminal, the method further includes:
If detecting that there is the subchannel subject to interference on the operating channel, the wireless access device determines the target channel mode based on the subchannel subject to interference and the radio channel mode supported by the terminal.

In a possible implementation of the tenth aspect, the first signaling is a beacon frame, an association request frame, an association response frame, a probe request frame, or a probe response frame.

In a possible implementation of the tenth aspect, the second signaling is a preamble puncturing action (Preamble Puncturing Action) frame.

In a possible implementation of the tenth aspect, the second signaling indicates the wireless access device to use the target channel mode when the wireless access device sends a packet.

In a possible implementation of the tenth aspect, the first signaling further includes a third field, the first field is used to determine a first channel mode set supported by the terminal, and the third field is used to determine a second channel mode set supported by the terminal.

In a possible implementation of the tenth aspect, each bit in the first field corresponds to one first channel mode in the first channel mode set, and each bit in the third field corresponds to one second channel mode in the second channel mode set.

In a possible implementation of the tenth aspect, the following is included:
When a first bit in the first field is a first value, it indicates that the terminal supports puncturing an 80 MHz operating channel, and punctured channels are a secondary 20 MHz channel on a primary 40 MHz channel and any 20 MHz channel on a secondary 40 MHz channel;
when a second bit in the first field is a first value, it indicates that the terminal supports puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when a third bit in the first field is a first value, it indicates that the terminal supports puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when a fourth bit in the first field is a first value, it indicates that the terminal supports puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3.

In a possible implementation of the tenth aspect, the following is included:
When the second field in the second signaling is a first numerical range, it indicates that the target channel mode is a first channel mode in the first channel mode set; or
when the second field in the second signaling is a second numerical range, it indicates that the target channel mode is a second channel mode in the second channel set.

In a possible implementation of the tenth aspect, the following is included:
When the second field in the second signaling is a third value, it indicates that the target channel mode is puncturing an 80 MHz operating channel, and punctured channels are a secondary 20 MHz channel on a primary 40 MHz channel and any 20 MHz channel on a secondary 40 MHz channel;
when the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3, where
the third value to the sixth value fall within the first numerical range.

In a possible implementation of the tenth aspect, the operating channel includes N available subchannels, the first field includes N bits, each bit is used to determine whether the terminal supports shielding the available subchannel corresponding to the bit, and N is a positive integer greater than 2.

In a possible implementation of the tenth aspect, when any bit in the first field is a first value, it indicates that the terminal supports shielding the available subchannel corresponding to the bit.

In a possible implementation of the tenth aspect, the second field in the second signaling includes N bits, and each bit corresponds to one available subchannel on one operating channel; and
when a bit in the second field is a first value, it indicates that the available subchannel corresponding to the bit in the target channel mode is a non-punctured channel; or
when a bit in the second field is a second value, it indicates that the available subchannel corresponding to the bit in the target channel mode is a punctured channel.

In a possible implementation of the tenth aspect, the first field further includes a first indication bit, and the first indication bit is used to determine a first bandwidth granularity for dividing the operating channel for an available subchannel.

In a possible implementation of the tenth aspect, the following is included:
When the first indication bit is a first value, it indicates that the first bandwidth granularity is 40 MHz; or
when the first indication bit is a second value, it indicates that the first bandwidth granularity is 20 MHz.

In a possible implementation of the tenth aspect, the second field further includes a second indication bit, and the second indication bit is used to determine a second bandwidth granularity of the available subchannel in the target channel mode.

In a possible implementation of the tenth aspect, the following is included:
When the second indication bit is a first value, it indicates that the second bandwidth granularity is 40 MHz; or
when the second indication bit is a second value, it indicates that the second bandwidth granularity is 20 MHz.

In a possible implementation of the tenth aspect, after that the wireless access device sends second signaling to the terminal, the method further includes:

The wireless access device sends a first packet to the terminal, where the first packet is generated based on the target communication mode; and/or
the terminal sends a second packet to the wireless access device, where the second packet is generated by the terminal based on the target communication mode.

It may be understood that, for beneficial effect of the second aspect to the tenth aspect, refer to related descriptions in the first aspect. Details are not described herein again.

### BRIEF DESCRIPTION OF DRAWINGS

FIG. 1 is a diagram of a structure of a terminal according to an embodiment of this application;
FIG. 2 is a block diagram of a software structure of a terminal according to an embodiment of this application;
FIG. 3 is a diagram of a structure of accessing a wireless network by a terminal according to an embodiment of this application;
FIG. 4 is an implementation diagram of a multi-channel bundling technology according to an embodiment of this application;
FIG. 5 is an implementation diagram of a puncturing technology according to an embodiment of this application;
FIG. 6 is a diagram of a structure of signaling according to an embodiment of this application;
FIG. 7 is a correspondence between each bit and a radio channel mode;
FIG. 8 is a diagram of an application scenario of a wireless communication manner according to an embodiment of this application;
FIG. 9 is an interaction flowchart of a wireless communication method according to an embodiment of this application;
FIG. 10 is a diagram of a structure of first signaling according to an embodiment of this application;
FIG. 11 is a diagram of a first channel mode according to this application;
FIG. 12 is a diagram of a structure of first signaling according to an embodiment of this application;
FIG. 13 is a correspondence between each bit in a first field and each available subchannel on an operating channel according to an embodiment of this application;
FIG. 14 is a diagram of a structure of a wireless communication system according to another embodiment of this application;
FIG. 15 is a diagram of selecting a target channel mode according to an embodiment of this application;
FIG. 16 is a diagram of a structure of second signaling according to an embodiment of this application;
FIG. 17 is a diagram of a structure of second signaling according to another embodiment of this application;
FIG. 18 is a diagram of a structure of a preamble part of a packet between a wireless access device and a terminal according to an embodiment of this application;
FIG. 19 is a diagram of a structure of a preamble part of a packet between a wireless access device and a terminal according to another embodiment of this application;
FIG. 20 is a flowchart of implementing a wireless communication method on a wireless access device side according to an embodiment of this application;
FIG. 21 is a flowchart of implementing a wireless communication method on a terminal side according to an embodiment of this application;
FIG. 22 is a block diagram of a structure of a wireless communication apparatus according to an embodiment of this application;
FIG. 23 is a block diagram of a structure of a wireless communication apparatus according to an embodiment of this application; and
FIG. 24 is a block diagram of a structure of an electronic device according to an embodiment of this application.

### DESCRIPTION OF EMBODIMENTS

In the following descriptions, for illustration instead of limitation, specific details such as a particular system structure and a particular technology are provided for thorough understanding of embodiments of this application. However, persons skilled in the art should understand that this application may also be implemented in other embodiments without these specific details. In other cases, detailed descriptions of a well-known system, apparatus, circuit, and method are omitted, so that this application is described without being obscured by unnecessary details.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application indicates any combination and all possible combinations of one or more associated listed items, and includes these combinations.

As used in the specification and the appended claims of this application, the term "if" may be interpreted, depending on the context, as "when" or "once" or "in response to determining" or "in response to detecting". Similarly, the phrase "if it is determined that" or "if [a described condition or event] is detected" may be interpreted, depending on the context, as "once it is determined that" or "in response to determining" or "once [a described condition or event] is detected" or "in response to detecting [a described condition or event]".

In addition, in the descriptions of the specification and the appended claims of this application, the terms "first", "second", "third", and the like are merely used for distinguishing descriptions, but cannot be understood as indicating or implying relative importance.

Reference to "an embodiment", "some embodiments", or the like described in the specification of this application means that one or more embodiments of this application include a specific feature, structure, or feature described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

A wireless communication method provided in embodiments of this application may be applied to a wireless communication system. The wireless communication system includes a wireless access device and a terminal. The wireless access device includes: a router, an optical modem having a function of a wireless local area network (wireless local area network, WLAN) (for example, a wireless fidelity (wireless fidelity, Wi-Fi) network), and the like. The terminal includes an electronic device, for example, a mobile phone, a tablet computer, an augmented reality (augmented reality, AR)/virtual reality (virtual reality, VR) display device, a notebook computer, an ultra-mobile personal computer (ultra-mobile personal computer, UMPC), a netbook, and a personal digital assistant (personal digital assistant, PDA).

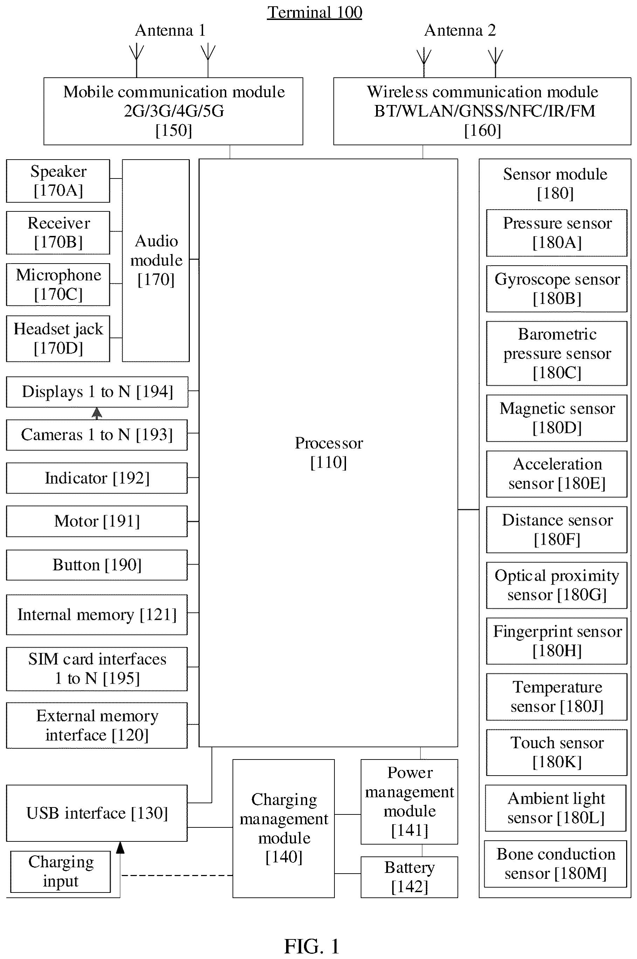

FIG. 1 is a diagram of a structure of a terminal 100.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal 100. In some other embodiments of this application, the terminal 100 may include more or fewer components than those shown in the figure, or some components may be combined, or some components may be split, or there may be different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a central processing unit, a distributed processing unit (Data Processing Unit, DPU), a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that have/has been recently used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the terminal 100. The processor 110 communicates with the display 194 through the DSI interface, to implement a display function of the terminal 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect the charger to charge the terminal 100, or may be configured to perform data transmission between the terminal 100 and a peripheral device, or may be configured to connect a headset for playing audio through the headset. The interface may alternatively be configured to connect to another terminal, for example, an AR device.

It may be understood that an interface connection relationship between the modules shown in this embodiment of the present invention is merely an example for description, and does not constitute a limitation on the structure of the terminal 100. In some other embodiments of this application, the terminal 100 may alternatively use an interface connection manner different from that in the foregoing embodiment, or may use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal 100. When charging the battery 142, the charging management module 140 may further supply power to the terminal through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal 100 The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transmitted to the application processor. The application processor outputs a sound signal by an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the terminal 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the terminal 100, the antenna 1 and the mobile communication module 150 are coupled, and the antenna 2 and the wireless communication module 160 are coupled, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 implements a display function through the GPU, the display 194, the application processor, and the like. The GPU is a prompt microprocessor, and is connected to the display 194 and the application processor. The GPU is configured to perform mathematical and geometric computation for graphic rendering. The processor 110 may include one or more GPUs that execute program instructions to generate or change displayed information. It should be noted that the GPU may perform, by using the wireless communication method provided in this embodiment, exception identification on a storage unit associated with the controlled display 194. The GPU may transmit image data that needs to be displayed to the storage unit in the display 194 for storage, to facilitate subsequent display. If the terminal is a smartphone, the terminal may be connected to external wearable glasses through a serial interface or a wireless communication interface, and in a VR display mode, a display function is implemented by using the wearable glasses.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal 100 may include one or N displays 194, where N is a positive integer greater than 1. The display 194 may include a touch panel and another input device. The display 194 may be associated with one or more storage units, and the storage unit is configured to buffer the image data displayed on the display 194.

The terminal 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transform and the like on frequency energy.

The video codec is configured to compress or decompress a digital video. The terminal 100 may support one or more types of video codecs. In this way, the terminal 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the terminal 100, for example, image recognition, facial recognition, voice recognition, and text understanding, may be implemented through the NPU.

The external memory interface 120 may be configured to connect to an external memory card, for example, a micro SD card, to extend a storage capability of the terminal 100. The external memory card communicates with the processor 110 through the external memory interface 120, to implement a data storage function. For example, files such as music and videos are stored in the external storage card. Similarly, the wireless communication method in this embodiment of this application may manage storage space in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and a phone book) and the like created when the terminal 100 is used. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the terminal 100.

The terminal 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal 100 may listen to music or answer a call in a hands-free mode through the speaker 170A. Particularly, the speaker 170A may be configured to output prompt information, to notify a user of a part that needs to be in contact with an electronic scale.

The receiver 170B, also referred to as an "earpiece", is configured to convert an audio electrical signal into a sound signal. When a call is answered or voice information is received by the terminal 100, the receiver 170B may be put close to a human ear to listen to a voice.

The microphone 170C, also referred to as a "mike" or a "mic", is configured to convert a sound signal into an electrical signal. When making a call or sending voice information, the user may make a sound near the microphone 170C through a mouth of the user, and input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. For example, the terminal may obtain a weight of the user through the pressure sensor 180A. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure intensity based on the change of the capacitance. When a touch operation is performed on the display 194, the terminal 100 detects intensity of the touch operation through the pressure sensor 180A. The terminal 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the terminal 100. In some embodiments, angular velocities of the terminal 100 around three axes (namely, x, y, and z axes) may be determined through the gyroscope sensor 180B. The gyroscope sensor 180B may be configured to implement image stabilization during photographing. For example, when the shutter is pressed, the gyroscope sensor 180B detects an angle at which the terminal 100 jitters, calculates, based on the angle, a distance for which a lens module needs to compensate, and allows the lens to cancel the jitter of the terminal 100 through reverse motion, to implement image stabilization. The gyroscope sensor 180B may also be used in a navigation scenario and a somatic game scenario.

The barometric pressure sensor 180C is configured to measure barometric pressure. In some embodiments, the terminal 100 calculates an altitude based on a barometric pressure value measured by the barometric pressure sensor 180C, to assist in positioning and navigation.

The magnetic sensor 180D includes a Hall sensor. The terminal 100 may detect opening and closing of a flip cover through the magnetic sensor 180D. In some embodiments, when the terminal 100 is a flip phone, the terminal 100 may detect opening and closing of a flip cover based on the magnetic sensor 180D. Further, a feature such as automatic unlocking of the flip cover is set based on a detected opening or closing state of a leather case or a detected opening or closing state of the flip cover.

The acceleration sensor 180E may detect magnitudes of accelerations of the terminal 100 in various directions (usually on three axes). When the terminal 100 is still, a magnitude and a direction of gravity may be detected. The acceleration sensor 180E may be further configured to recognize a posture of the terminal, and is applied to an application such as switching between a landscape mode and a portrait mode or a pedometer.

The distance sensor 180F is configured to measure a distance. The terminal 100 may measure the distance in an infrared manner or a laser manner. In some embodiments, in a photographing scenario, the terminal 100 may measure a distance through the distance sensor 180F, to implement quick focusing.

The optical proximity sensor 180G may include, for example, a light-emitting diode (LED) and an optical detector, for example, a photodiode. The light-emitting diode may be an infrared light-emitting diode. The terminal 100 emits infrared light through the light-emitting diode. The terminal 100 detects infrared reflected light from a nearby object through the photodiode. When sufficient reflected light is detected, it may be determined that there is an object near the terminal 100. When insufficient reflected light is detected, the terminal 100 may determine that there is no object near the terminal 100. The terminal 100 may detect, through the optical proximity sensor 180G, that the user holds the terminal 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The terminal 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the terminal 100 is in a pocket, to avoid an accidental touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing policy based on a temperature detected by the temperature sensor 180J. For example, when the temperature reported by the temperature sensor 180J exceeds a threshold, the terminal 100 lowers performance of a processor located near the temperature sensor 180J, to reduce power consumption for thermal protection. In some other embodiments, when the temperature is lower than another threshold, the terminal 100 heats the battery 142 to avoid abnormal shutdown of the terminal 100 due to a low temperature. In some other embodiments, when the temperature is lower than still another threshold, the terminal 100 boosts an output voltage of the battery 142 to avoid abnormal shutdown caused by a low temperature.

The touch sensor 180K is also referred to as a "touch device". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the terminal 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive a button input, and generate a button signal input related to a user setting and function control of the terminal 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is also compatible with different types of SIM cards. The SIM card interface 195 is also compatible with an external storage card. The terminal 100 interacts with a network by using the SIM card, to implement functions such as calling and data communication. In some embodiments, the terminal 100 uses an eSIM, namely, an embedded SIM card. The eSIM card may be embedded in the terminal 100, and cannot be separated from the terminal 100.

A software system of the terminal 100 may use a layered architecture, an event-driven architecture, a microkernel architecture, a microservice architecture, or a cloud architecture. In this embodiment of the present invention, an Android system with a layered architecture is used as an example to illustrate a software structure of the terminal 100.

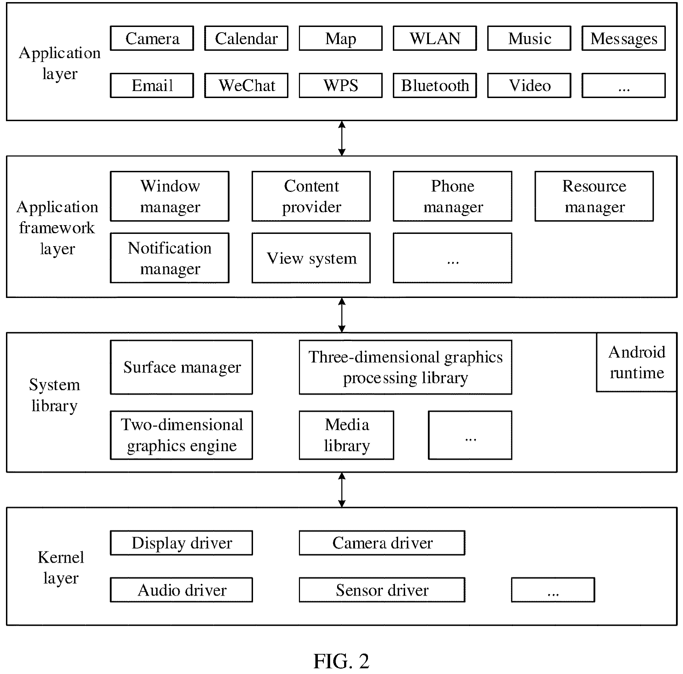

FIG. 2 is a block diagram of a software structure of a terminal according to an embodiment of this application.

In a layered architecture, software is divided into several layers, and each layer has a clear role and task. The layers communicate with each other through a software interface. In some embodiments, an Android system is divided into four layers: an application layer, an application framework layer, Android runtime (Android runtime) and a system library, and a kernel layer from top to bottom.

The application layer may include a series of application packages.

As shown in FIG. 2, the application package may include applications such as Camera, Calendar, Map, WLAN, Bluetooth, Music, Video, Messages, Email, WeChat, and WPS.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and a bookmark, an address book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function for the terminal, for example, management of a call status (including answering, hanging up, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in the status bar, a prompt tone is made, the terminal vibrates, or the indicator light flashes.

The Android runtime includes a kernel library and a virtual machine. The Android runtime is responsible for scheduling and management of the Android system.

The kernel library includes two parts: a function that needs to be invoked in a Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system layer may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display sub-system and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes working procedures of software and hardware of the terminal 100 by using an example with reference to a photographing capture scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a touch and tap operation, and a control corresponding to the tap operation is a control of a camera application icon is used. The camera application invokes an interface of the application framework layer, to start the camera application, then starts the camera driver by invoking the kernel layer, and captures a static image or a video through the camera 193.

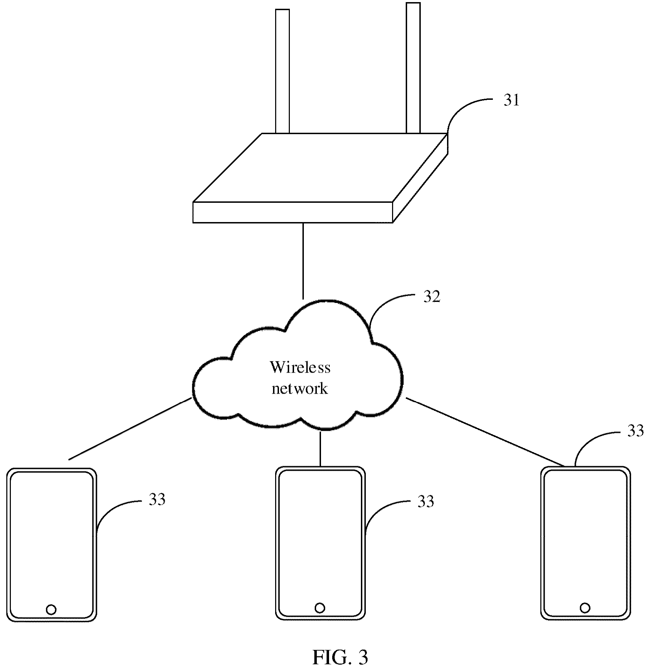

With continuous development of wireless network technologies, application scenarios of the wireless network technologies increase accordingly, and the wireless network technologies have become an important connection manner for a terminal to access the Internet. To provide a stable and reliable wireless network for a terminal in a scenario, a wireless access (Access Point, AP) device may be configured in the scenario. The AP device may transmit a wireless network through a built-in wireless communication module, and the terminal may access, through a local Wi-Fi module, the wireless network transmitted by the AP device, to implement an objective of accessing the Internet. In addition to communicating with the Internet, the terminal may further implement, through the wireless network, data transmission with another terminal that accesses a same wireless network. For example, FIG. 3 is a diagram of a structure of accessing a wireless network by a terminal according to an embodiment of this application. Refer to FIG. 3. An AP device 31 may provide one wireless network 32, and a plurality of terminals 33 may access the wireless network 32, access the Internet through the AP device 31, and implement data exchange between the plurality of terminals 33 in a local area network. Therefore, in a process in which the terminal performs data transmission through the wireless network, regardless of a process of communicating with the Internet or a process of communicating with another device in the local area network, a data transmission rate when the terminal uses the wireless network is related to a network bandwidth of the wireless network provided by the AP device.

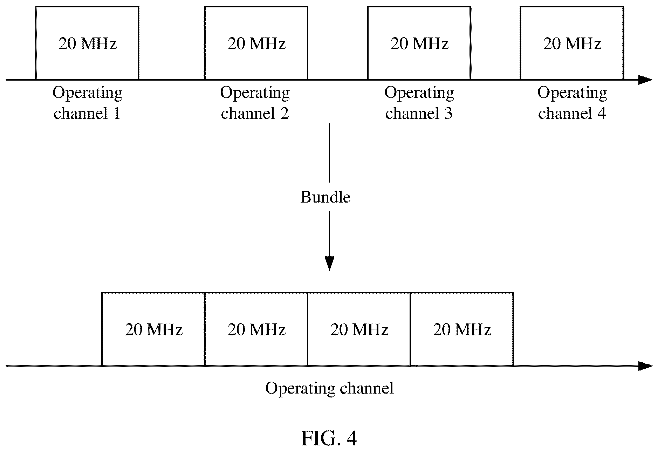

In some existing wireless communication technologies, for example, a wireless communication technology according to the 802.11 protocol, the wireless network provided by the AP device for the terminal mainly uses a 20 MHz bandwidth. Consequently, this greatly limits the transmission rate when the terminal uses the wireless network. Therefore, to provide a higher channel bandwidth for the wireless network, bandwidth resources of a plurality of channels may be bundled. For example, in a wireless communication technology according to the 802.11n protocol, a plurality of 20 MHz channels may be bundled to form one overall bandwidth resource, namely, one operating channel. When accessing the wireless network provided by the AP device, the terminal may perform data transmission through the operating channel obtained by bundling the plurality of channels. This greatly increases the data transmission rate of the wireless network. For example, FIG. 4 is an implementation diagram of a multi-channel bundling technology according to an embodiment of this application. Refer to FIG. 4. A wireless network provided by an AP device may implement data transmission by using bandwidth resources of a plurality of channels. In a wireless network constructed according to the 802.11 protocol, the bandwidth resources of the foregoing different channels are independent of each other. This limits a transmission rate when a terminal passes through the wireless network. A wireless network constructed according to the 802.11n protocol supports a bundling technology. Therefore, bandwidth resources of a plurality of channels may be bundled to form one operating channel. For example, four 20 MHz bandwidth resources are bundled into one 80 MHz operating channel, to provide a wireless network with a higher transmission rate.

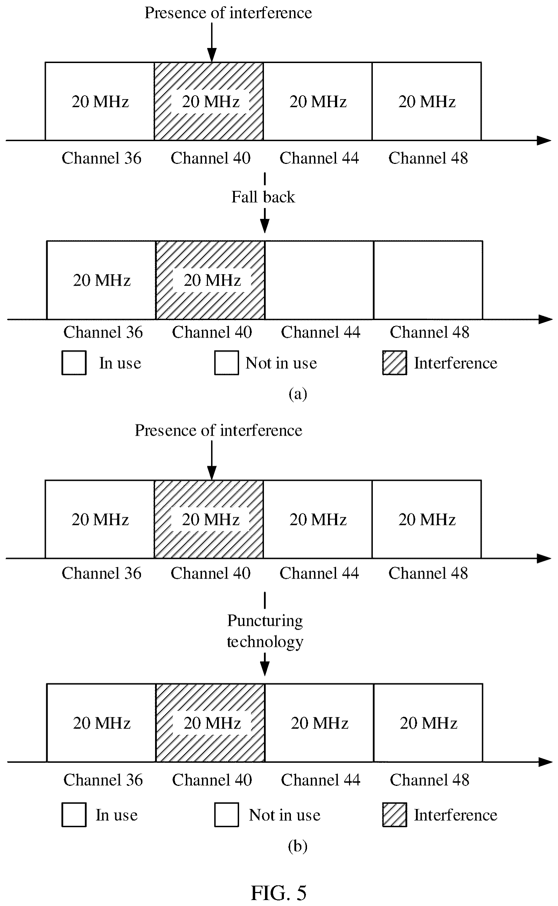

However, in a process of performing data transmission through the bundled operating channel, if a specific channel is interfered with, the operating channel falls back to a bandwidth resource corresponding to one channel. For example, the 80 MHz operating channel falls back to 20 MHz. For example, FIG. 5 is an implementation diagram of a puncturing technology according to an embodiment of this application. Refer to (a) in FIG. 5. The AP device may bundle and combine bandwidth resources of four channels: a channel 36, a channel 40, a channel 44, and a channel 48, by using a bundling technology, to obtain one 80 MHz operating channel. If there is interference on the channel 40, the operating channel falls back to a single channel, that is, falls back to 20 MHz. However, even if there is no interference on the channel 44 and the channel 48, the channel 44 and the channel 48 cannot be used. Consequently, a bandwidth is naturally wasted, and utilization of a channel bandwidth is reduced. Therefore, to improve utilization of the bandwidth resource on the operating channel based on the bundling technology, the puncturing technology is also generated accordingly. In an existing wireless network technology, for example, a wireless network provided according to 802.11ax, a preamble puncturing (Preamble Puncturing) technology is introduced, to provide an anti-interference mechanism. The mechanism may run the AP device to send a packet on a bandwidth resource with some holes, that is, transmit data between terminals. When detecting that there is interference on some channels on the operating channel, the AP device may perform puncturing processing on this part of bandwidth resources, to ensure that a punctured resource of another channel can be normally used, to achieve anti-interference and maximize use of the channel bandwidth. As shown in (b) in FIG. 5, when there is interference on the channel 40, puncturing processing may be performed on the channel 40, so that the AP device can continue to send a packet on the channel 36, the channel 44, and the channel 48, and fully use a remaining idle bandwidth resource.

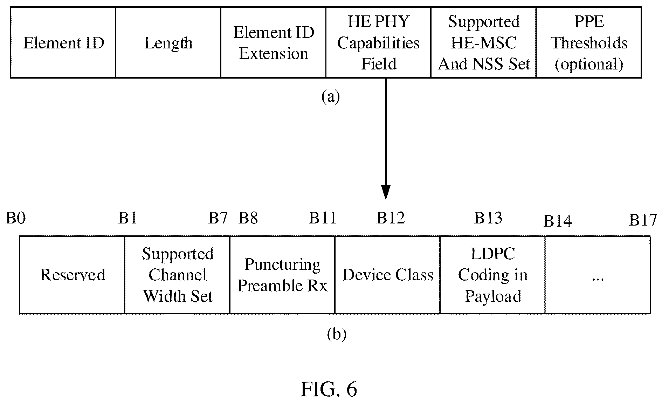

To send the packet through the wireless network based on the puncturing technology, when a wireless communication connection between the AP device and the terminal is established, whether the terminal supports the puncturing technology needs to be confirmed. That is, both the AP device and the terminal need to support the puncturing technology, so that the wireless network based on the puncturing technology can be used to complete packet sending and receiving. Therefore, when the terminal that accesses the AP device supports the puncturing technology, a supported radio channel mode may be notified to the AP device by using a preset field in signaling. The signaling includes a communication capability field, which may be specifically an HE PHY Capabilities Field. The field has a corresponding byte used to determine the radio channel mode supported by the terminal. For example, FIG. 6 is a diagram of a structure of signaling according to an embodiment of this application. Refer to (a) in FIG. 6. The signaling includes a plurality of fields, for example, a signaling identifier (Element ID), a signaling length (Length), a signaling extension identifier (Element ID Extension), and a communication capability field (HE PHY Capabilities Field). The communication capability field includes a plurality of bytes, and different bits in each byte represent different content. (b) in FIG. 6 shows content represented by some bits in the communication capability field. The communication capability field includes 18 bits, which are respectively B0 to B17. B0 may be a reserved (Reserved) bit; B1 to B7 are used to determine a channel bandwidth (Supported Channel Width Set) supported by a terminal; B8 to B11 are used to determine a radio channel mode (Puncturing Preamble Rx) supported by the terminal, namely, specific supported puncturing patterns; B12 may identify a device class (Device Class) of the terminal; and B13 may indicate whether signaling includes a packet error correction code (LDPC Coding in Payload). A function of another bit may be determined based on content of a wireless protocol.

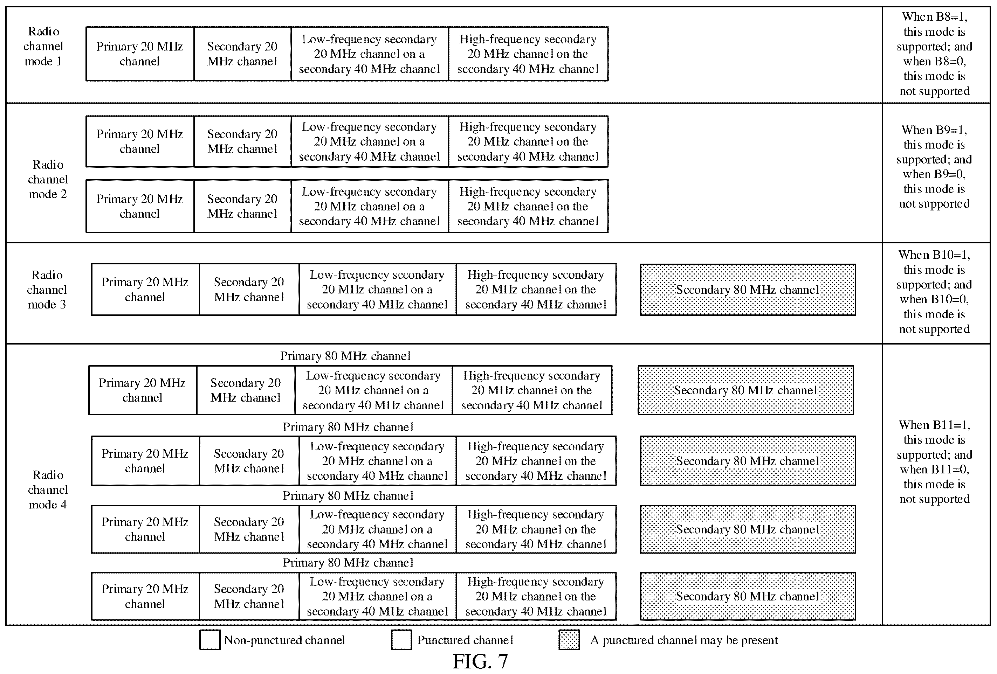

Each bit in B8 to B11 corresponds to one radio channel mode, and whether the terminal supports a corresponding radio channel mode is determined based on a value corresponding to the bit. For example, if a bit corresponding to any radio channel mode is 1, it indicates that the terminal supports the radio channel mode. Otherwise, if the bit is 0, it indicates that the terminal does not support the radio channel mode. For example, FIG. 7 is a correspondence between each bit and a radio channel mode. Refer to FIG. 7. The correspondence between each bit and a radio channel mode is specifically described as follows:

Radio channel mode 1 corresponding to B8: A bundled operating channel is 80 MHz, puncturing is performed on an 80 MHz bandwidth, the operating channel is divided into a primary bandwidth (40 MHz) and a secondary bandwidth (40 MHz), and a shielded channel is a secondary 20 MHz channel on the primary 40 MHz channel.

Radio channel mode 2 corresponding to B9: A bundled operating channel is 80 MHz, puncturing is performed on an 80 MHz bandwidth, and a shielded channel is any 20 MHz channel on a secondary 40 MHz channel, and therefore, correspondingly, the mode may correspond to two different puncturing patterns. In an actual transmission process, if the radio channel mode 2 is supported, any one of the puncturing patterns may be used.

Radio channel mode 3 corresponding to B10: A bundled operating channel is 160 MHz, puncturing is performed on a 160 MHz bandwidth, the operating channel is divided into a primary bandwidth (80 MHz) and a secondary bandwidth (80 MHz), and a shielded channel is a secondary 20 MHz channel on a primary 40 MHz channel. There may be 0 to 2 shielded channels on the secondary 80 MHz channel; and when there are two shielded channels, the shielded channels are first two 20 MHz subchannels or last two 20 MHz subchannels. Because there are a plurality of types of shielding cases corresponding to the secondary 80 MHz channel, the shielding cases are not enumerated herein.

Radio channel mode 4 corresponding to B 11: A bundled operating channel is 160 MHz, puncturing is performed on a 160 MHz bandwidth, and the operating channel is divided into a primary bandwidth (80 MHz) and a secondary bandwidth (80 MHz). On the primary 80 MHz channel, there may be any 0 to 2 shielded channels on a secondary 40 MHz channel, and there may be 0 to 2 puncturing holes on the secondary 80 MHz channel. When there are two holes, first two 20 MHz subchannels or last two 20 MHz subchannels are required.

It can be learned that, in an existing puncturing technology, not all subchannels of the channel on the operating channel can be shielded, and a combination of subchannels that can be shielded is also bundled to the radio channel mode. Consequently, a subchannel that needs to be shielded cannot be set based on an actual requirement. For example, the bundled operating channel is 80 MHz, that is, includes four channels: a channel 36, a channel 40, a channel 44, and a channel 48. If it is detected that there is interference on the channel 40 and the channel 44, a secondary 20 MHz channel (namely, the channel 40) on primary 40 MHz and a secondary 20 MHz channel (namely, the channel 44) on secondary 40 MHz need to be shielded. A puncturing pattern corresponding to each radio channel mode is queried, and neither the radio channel mode 1 nor the radio channel mode 2 can meet the foregoing shielding requirement. Therefore, in the existing puncturing technology, a small quantity of puncturing patterns may be provided, and a shielding requirement in some scenarios cannot be met. In addition, only four bits are allocated to a communication capability field to determine a radio channel mode supported by the terminal, and subsequent bits are used to determine a communication capability in another dimension. This limits extension of the radio channel mode, has low scalability, and then reduces an application scenario range of the puncturing technology.

In addition, after determining the radio channel mode used in the process of communicating with the terminal, the wireless access device does not notify the terminal of the radio channel mode used by the wireless access device, but directly sends the packet without limiting a wireless communication mode used for the packet fed back by the terminal. The terminal may send the packet in a non-puncturing mode, thereby reducing an anti-interference capability in a process of sending the packet by the terminal to the AP device and a transmission rate of the returned packet.

### Embodiment 1:

Therefore, to resolve the problem existing in the foregoing puncturing technology, this application provides a wireless communication method. The wireless communication method is applied to a wireless communication system, and the wireless communication system includes at least one wireless access device (namely, an AP device) and one terminal. The AP device may provide a wireless network. The wireless network is a wireless network that supports a puncturing technology. The terminal may access the wireless network through a built-in wireless communication module. A wireless communication connection between the AP device and the terminal may be established by using the wireless communication method provided in this embodiment of this application.

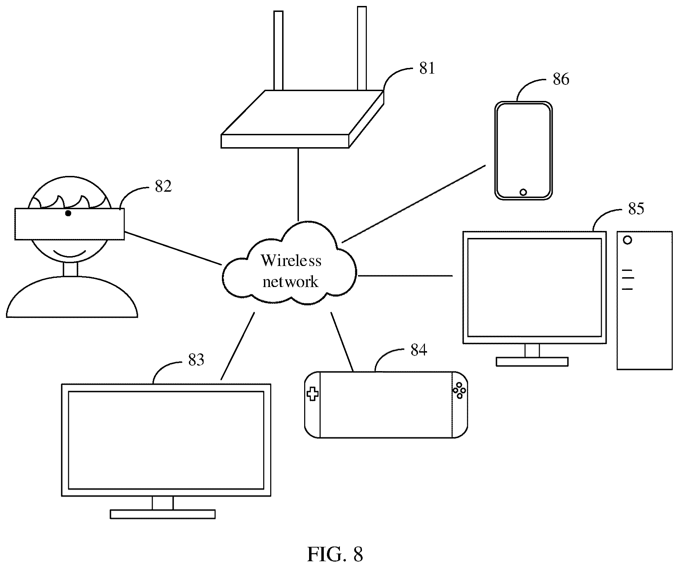

For example, FIG. 8 is a diagram of an application scenario of the wireless communication manner according to an embodiment of this application. Refer to FIG. 8. In the application scenario, a wireless access AP device 81 is included. The AP device may be a router. The AP device 81 may transmit a wireless network. Another terminal in the scenario may access the wireless network. The terminal may include different types of terminals such as a VR/AR device 82, a smart television 83, an electronic game console 84, a computer device 85, and a smartphone 86. The computer device 85 may be applied to a remote office scenario, a telemedicine scenario, an industrial Internet scenario, and the like. When using the wireless network, the foregoing different terminals all need to transmit packets of a large data amount. Therefore, there is a specific requirement for a transmission rate of the wireless network. The AP device may combine bandwidth resources of a plurality of different channels by using a bundling technology, and shield bandwidth resources of some channels by using the puncturing technology provided in this application when there is channel interference. This improves utilization of network resources of the entire operating network, and also improves an anti-interference capability of the bundled operating channel.

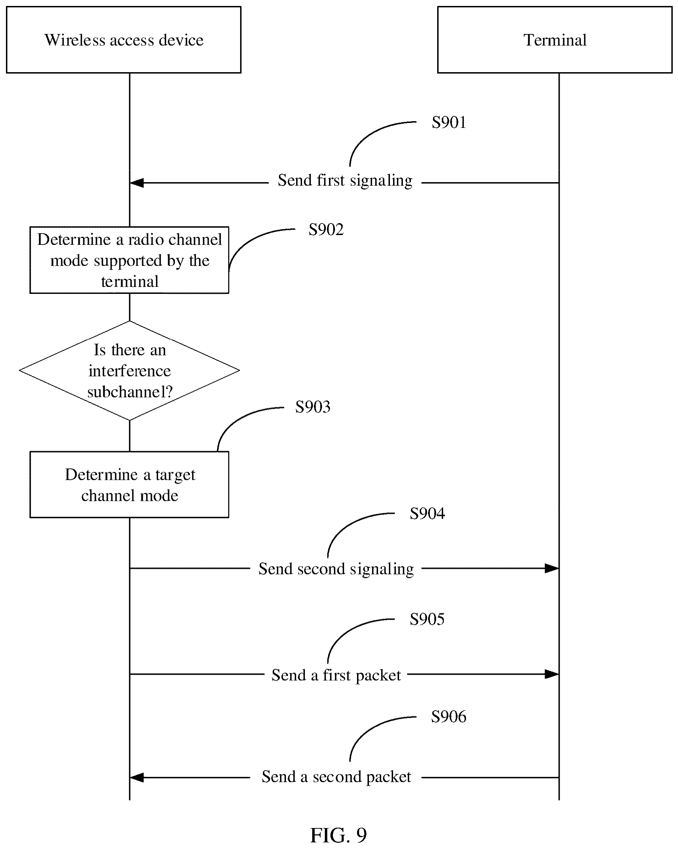

The following specifically describes an implementation process of the wireless communication method provided in embodiments of this application. FIG. 9 is an interaction flowchart of a wireless communication method according to an embodiment of this application. Refer to FIG. 9. The wireless communication method provided in this embodiment of this application specifically includes S901 to S906. A specific implementation process is described in detail as follows:

S901: A terminal sends first signaling to a wireless access device, where the first signaling includes a first field, and the first field is used to determine a radio channel mode supported by the terminal.

In this embodiment, when accessing a wireless network of the wireless access device (namely, an AP device), the terminal needs to determine a target channel mode used for a wireless communication connection established with the terminal, and the terminal sends the first signaling to the wireless access device. In a process of accessing the wireless network of the AP device, the terminal may send a plurality of types of different signaling, including: a beacon (Beacon) frame, an association request (Association Request) frame, an association response (Association Response) frame, a probe request (Probe Request) frame, a probe response (Probe Response) frame, and the like. All the foregoing plurality of types of different signaling may carry the first field, so that an objective of notifying the AP device of the radio channel mode supported by the terminal can be implemented, that is, the first signaling may be any one of the foregoing types of signaling.

In this embodiment, the first signaling includes the first field and a third field. The first field is a field that is for extending an existing radio channel mode, and is used to determine whether the terminal supports a newly added radio channel mode. The third field is used to determine whether the terminal supports the existing radio channel mode, that is, the first field and the third field jointly determine the radio channel mode supported by the terminal. Based on this, the terminal may record a locally supported radio channel mode in the third field and the first field. The third field is for recording an existing puncturing pattern, that is, determine radio channel modes supported in the conventional technology, for example, the radio channel mode 1 to the radio channel mode 4. The first field may be for recording an extended puncturing pattern and a newly added puncturing pattern in a future wireless communication process. A quantity of bits occupied by the first field may be determined based on an actual case, and is not limited herein. The first field in the first signaling carries information for determining the radio channel mode, so that the existing puncturing pattern can be extended, to increase a quantity of puncturing patterns, and improve flexibility of a shielded channel.

This embodiment of this application provides the following two manners to determine, by using the third field and the first field, the radio channel mode supported by the terminal.

Manner 1: That an original radio channel mode is supported is recorded by using the third field, and that a newly added radio channel mode is supported is recorded by using the first field. A specific implementation process is as follows:

In this embodiment, four radio channel modes, that is, corresponding to four different puncturing patterns, have been defined in the existing wireless communication technology. However, the foregoing puncturing patterns cannot meet an existing use requirement. Therefore, at least four different puncturing patterns are newly added, that is, four different radio channel modes are newly added; and whether the terminal supports the four newly added radio channel modes is determined by using the first field. On this basis, to ensure that the first signaling is compatible with an existing wireless communication protocol, in this embodiment, the third field is reserved to record the four existing radio channel modes. For ease of description, a radio channel mode that has been defined in the existing protocol is referred to as a second channel mode, and an extended radio channel mode in this embodiment of this application is referred to as a first channel mode. To be specific, the third field in the first signaling is used to determine a second channel mode set supported by the terminal, and the second channel mode set includes a plurality of second channel modes, which are respectively the radio channel mode 1 to the radio channel mode 4; and the first field in the first signaling is used to determine a first channel mode set supported by the terminal, and the first channel mode set includes a plurality of first channel modes, which are respectively a radio channel mode 4 to a radio channel mode 8 below.

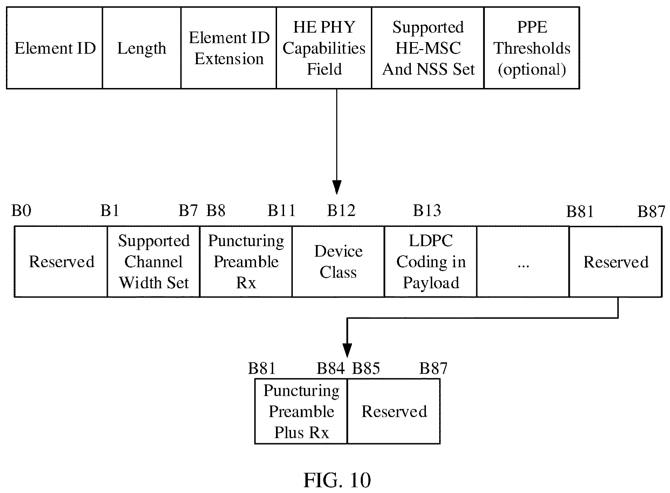

For example, FIG. 10 is a diagram of a structure of first signaling according to an embodiment of this application. As shown in FIG. 10, a communication capability field in the first signaling includes at least 88 bits, that is, corresponding to 11 bytes. A field corresponding to B8 to B11 is the foregoing third field, B81 to B87 are a reserved byte in the communication capability field, and the first field in this embodiment of this application is B81 to B84 in the reserved byte. The third field includes a plurality of bits, namely, B8 to B11. A correspondence between each bit in the third field and the second channel mode is described as follows:

Radio channel mode 1 corresponding to B8: A bundled operating channel is 80 MHz, puncturing is performed on an 80 MHz bandwidth, the operating channel is divided into a primary bandwidth (40 MHz) and a secondary bandwidth (40 MHz), and a shielded channel is a secondary 20 MHz channel on the primary 40 MHz channel.

Radio channel mode 2 corresponding to B9: A bundled operating channel is 80 MHz, puncturing is performed on an 80 MHz bandwidth, and a shielded channel is any 20 MHz channel on a secondary 40 MHz channel, and therefore, correspondingly, the mode may correspond to two different puncturing patterns. In an actual transmission process, if the radio channel mode 2 is supported, any one of the puncturing patterns may be used.

Radio channel mode 3 corresponding to B10: A bundled operating channel is 160 MHz, puncturing is performed on a 160 MHz bandwidth, the operating channel is divided into a primary bandwidth (80 MHz) and a secondary bandwidth (80 MHz), and a shielded channel is a secondary 20 MHz channel on a primary 40 MHz channel. There may be 0 to 2 shielded channels on the secondary 80 MHz channel; and when there are two shielded channels, the shielded channels are first two 20 MHz subchannels or last two 20 MHz subchannels. Because there are a plurality of types of shielding cases corresponding to the secondary 80 MHz channel, the shielding cases are not enumerated herein.

Radio channel mode 4 corresponding to B11: A bundled operating channel is 160 MHz, puncturing is performed on the 160 MHz bandwidth, and the operating channel is divided into a primary bandwidth (80 MHz) and a secondary bandwidth (80 MHz). On the primary 80 MHz channel, there may be any 0 to 2 shielded channels on a secondary 40 MHz channel, where on the primary 80 MHz channel, there are two 20 MHz channels on the secondary 40 MHz channel, which are respectively a low frequency part (namely, secondary 40 MHz low) on the secondary 40 MHz channel and a high frequency part (namely, secondary 40 MHz high) on the secondary 40 MHz channel; and there may be 0 to 2 puncturing holes on the secondary 80 MHz channel. When there are two holes, first two 20 MHz subchannels or last two 20 MHz subchannels are required.

It can be learned that, the radio channel mode corresponding to B8 to B11 is consistent with the radio channel mode in the conventional technology, so that the first signaling is compatible with the existing wireless communication protocol. This improves compatibility of the first signaling.

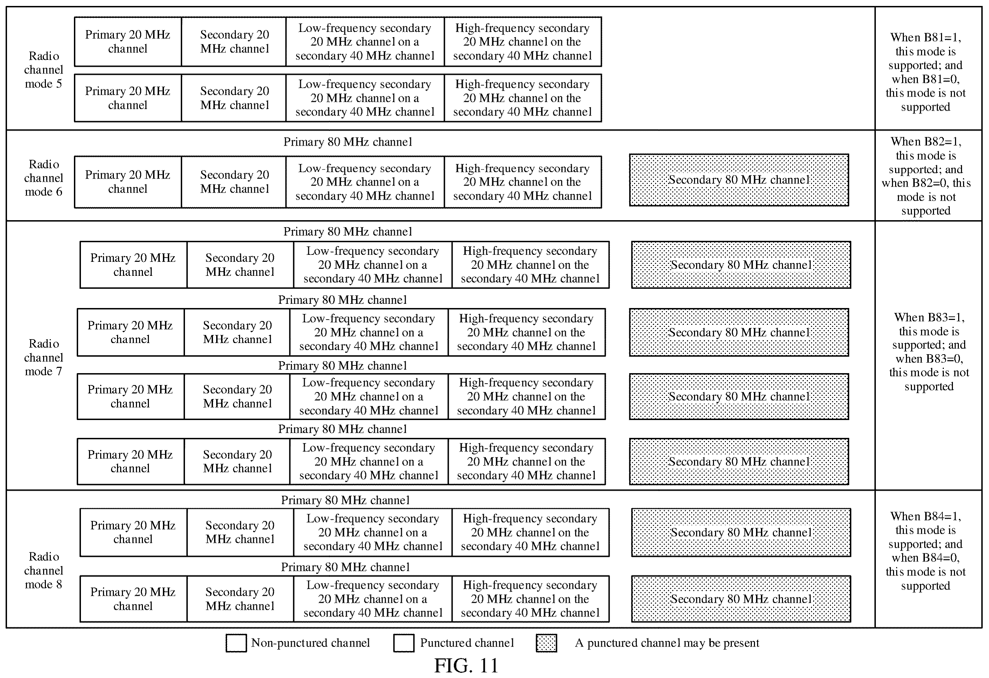

In this embodiment, in B8 to B11, the original radio channel mode is reserved. To increase available puncturing patterns, in this embodiment, B81 to B84 in the reserved byte in the original communication capability field are provided as the first field, to determine whether the newly added radio channel mode is supported, that is, determine whether the terminal supports four added first channel modes. The first field includes a plurality of bits, namely, B81 to B84; and each bit in the first field corresponds to one first channel mode, and is used to determine whether the terminal supports the corresponding first channel mode. FIG. 11 is a diagram of a first channel mode according to this application. As shown in FIG. 11, a correspondence between the first channel mode and each bit in the first field is specifically described as follows:

Radio channel mode 5 corresponding to B81: A bundled operating channel is 80 MHz, puncturing is performed on the 80 MHz operating channel, and the punctured channels are a secondary 20 MHz channel on a primary 40 MHz channel and any 20 MHz channel on a secondary 40 MHz channel. Similarly, because the secondary 40 MHz channel includes two 20 MHz channels, the radio channel mode 5 corresponds to two puncturing patterns. When the terminal supports the radio channel mode 5, one of the foregoing two puncturing patterns may be used for subsequent transmission. For example, a 1^{st} 20 MHz channel on the secondary 40 MHz channel may be shielded, and a 2^{nd} 20 MHz channel on the secondary 40 MHz channel may also be shielded. This may be specifically selected based on an actual case. Therefore, when B81 is a first value, it indicates that the terminal supports the radio channel mode 5, and the first value may be 1; or when B81 is a second value, it indicates that the terminal does not support the radio channel mode 5, and the second value may be 0.

Radio channel mode 6 corresponding to B82: A bundled operating channel is 160 MHz, puncturing is performed on the 160 MHz operating channel, the punctured channels are a secondary 20 MHz channel on a primary 40 MHz channel on a primary 80 MHz channel and P 20 MHz channels on a secondary 80 MHz channel, and P is any integer in 0 to 3. Because there are a plurality of types of shielding cases corresponding to the secondary 80 MHz channel, the shielding cases are not enumerated herein. Therefore, when B82 is a first value, it indicates that the terminal supports the radio channel mode 6, and the first value may be 1; or when B82 is a second value, it indicates that the terminal does not support the radio channel mode 6, and the second value may be 0.

Radio channel mode 7 corresponding to B83: A bundled operating channel is 160 MHz, puncturing is performed on the 160 MHz operating channel, the punctured channels are Q 20 MHz channels on a secondary 40 MHz channel on primary 80 MHz and R 20 MHz channels on a secondary 80 MHz channel, Q is any integer in 0 to 2, and R is any integer in 0 to 3. Because there are a plurality of types of shielding cases corresponding to the secondary 80 MHz channel, the shielding cases are not enumerated herein. Therefore, when B83 is a first value, it indicates that the terminal supports the radio channel mode 7, and the first value may be 1; or when B83 is a second value, it indicates that the terminal does not support the radio channel mode 7, and the second value may be 0.

It should be noted that, in comparison with the radio channel mode 4, in the radio channel mode 7, when there is no shielded channel on the secondary 40 MHz channel on the primary 80 MHz channel, although in the radio channel mode 4, two punctured secondary 20 MHz channels can be included, but there is a requirement for the two shielded secondary 20 MHz channels, to be specific, the two shielded secondary 20 MHz channels need to be first two secondary 20 MHz channels or last two secondary 20 MHz channels, that is, there is a bundling relationship exists; and in the radio channel mode 7, 0 to 3 secondary 20 MHz channels can be included, and there is no location requirement for the punctured secondary 20 MHz channels, that is, shielding flexibility of the radio channel mode 7 is higher, and the puncturing pattern of the radio channel mode 4 is covered.

Radio channel mode 8 corresponding to B84: A bundled operating channel is 160 MHz, puncturing is performed on the 160 MHz operating channel, the punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3. Because there are a plurality of types of shielding cases corresponding to the secondary 80 MHz channel, the shielding cases are not enumerated herein. Therefore, when B84 is a first value, it indicates that the terminal supports the radio channel mode 8, and the first value may be 1; or when B84 is a second value, it indicates that the terminal does not support the radio channel mode 8, and the second value may be 0.

It can be learned that, the radio channel mode corresponding to B81 to B84 is different from the radio channel mode in the conventional technology, is for supplementing to the existing radio channel mode, so that all cases of channel combinations that need to be shielded on the 80 MHz and 160 MHz bandwidths can be covered, to meet an actual use requirement.

In this embodiment, the terminal may determine a value of each bit in the first field based on the supported first channel mode. For example, if the terminal supports the radio channel mode 1, B81 (namely, a first bit) may be set to 1; or if the terminal does not support the radio channel mode 5, B81 may be set to 0. Similarly, values corresponding to a second bit to a fourth bit may also be determined based on whether the terminal supports the radio channel mode 5 to 8. If the corresponding first channel mode is supported, a corresponding bit is configured as the first value; or if the corresponding first channel mode is not supported, a corresponding bit is configured as the second value.

In this embodiment, the terminal may determine a value of each bit in the third field based on the supported second channel mode. For example, if the terminal supports the radio channel mode 1, B8 (a first bit in the third field) may be set to 1; or if the terminal does not support the radio channel mode 1, B8 may be set to 0. Similarly, values corresponding to a second bit to a fourth bit in the third field may also be determined based on whether the radio channel modes 2 to 4 are supported. If the corresponding second channel mode is supported, a corresponding bit is configured as the first value; or if the corresponding second channel mode is not supported, a corresponding bit is configured as the second value.

In this embodiment, the terminal may generate the first signaling based on the third field and the first field that are configured with values, that is, determine values of B8 to B11 and B81 to B84 in the communication capability field in the first signaling, and determine, based on the values of the two fields, the radio channel mode supported by the terminal.

In a possible implementation, if the operating channel is increased to 320 MHz or a higher bandwidth, because B85 to B87 in the reserved byte of the communication capability field are still not defined, whether the terminal supports a subsequent wireless communication mode with a higher bandwidth may be determined by using B85 to B87. Certainly, a quantity of bytes of the communication capability field may also be increased based on an actual case, that is, the reserved byte may occupy two bytes or more bytes, to support more wireless communication modes.

In this embodiment of this application, whether the terminal supports the first channel mode is determined by using the third field, and whether the terminal supports the second channel mode is determined by using the first field, so that a quantity of radio channel modes that can be supported can be increased, that is, a quantity of supported puncturing patterns can be increased, while it is ensured that the first signaling supports the existing wireless communication protocol, thereby improving application flexibility of the puncturing technology, and improving an anti-interference capability of the operating channel based on the bundling technology.

Manner 2: A shielded available sub-bandwidth supported by the terminal is determined by using each bit in the first field.

A difference from Manner 1 is that in Manner 1, each bit (which includes the first bit in the third field and the second bit in the first field) corresponds to one radio channel mode, to be specific, each bit in Manner 1 is used to determine whether the terminal supports the corresponding radio channel mode, and the radio channel mode corresponds to one or more puncturing patterns; and in Manner 2, each bit (that is, each bit in the first field) corresponds to each available subchannel on the operating channel, to be specific, the first field may construct a bitmap corresponding to the operating channel of the terminal, and the bitmap is used to determine a status of the shielded available subchannel that is supported.

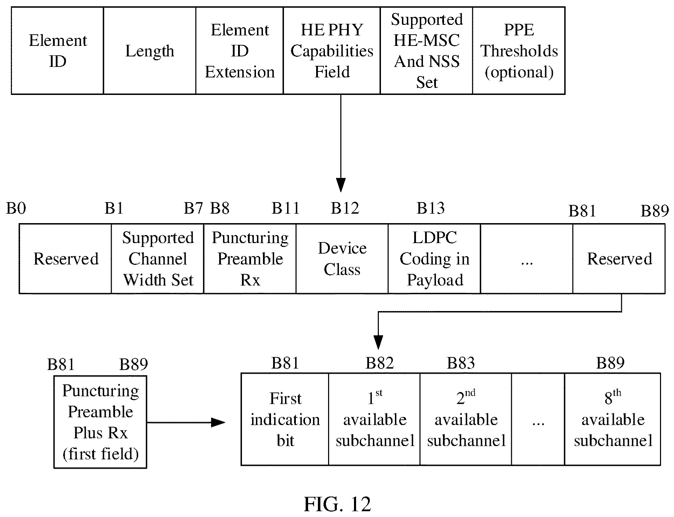

For example, FIG. 12 is a diagram of a structure of first signaling according to an embodiment of this application. As shown in FIG. 12, a communication capability field in the first signaling includes at least 90 bits. A field corresponding to B8 to B11 is the foregoing third field, B81 to B89 are a reserved byte in the communication capability field, and the first field in this embodiment of this application includes B82 to B89. Each bit in the first field is used to determine whether the terminal supports shielding a corresponding subchannel. If the terminal supports shielding the subchannel corresponding to a specific bit, the bit may be set to a first value, and the first value may be 1; or if the terminal does not support shielding the subchannel corresponding to a specific bit, the bit may be set to a second value, and the second value may be 0. For a function corresponding to another bit, refer to related descriptions in FIG. 10. Details are not described herein again. B81 may be a first indication bit.

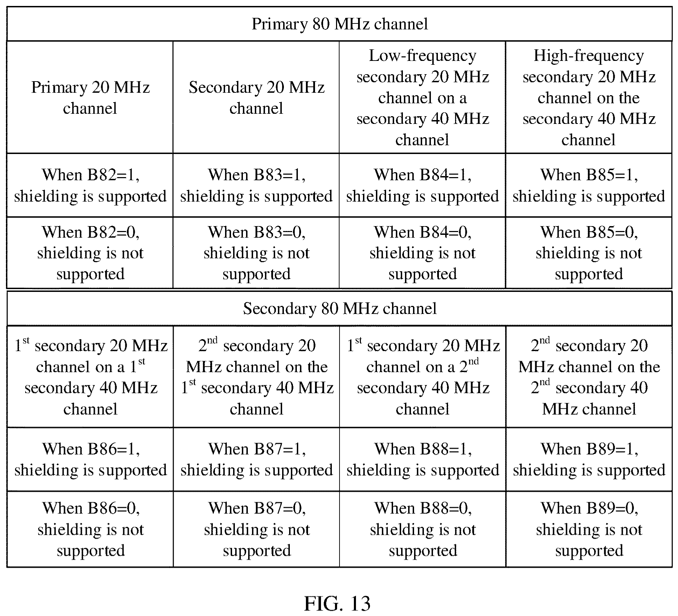

For example, FIG. 13 is a correspondence between each bit in a first field and each available subchannel on an operating channel according to an embodiment of this application. As shown in FIG. 13, the correspondence between each bit in the first field and the available subchannel corresponding to the bit is as follows:

A first bit (for example, B82) in the first field corresponds to a primary 20 MHz channel on a primary 40 MHz channel on a primary 80 MHz channel on the operating channel. When the first bit in the first field is a first value, it indicates that the terminal supports shielding the primary 20 MHz channel on the primary 40 MHz channel on the primary 80 MHz channel; or when the first bit in the first field is a second value, it indicates that the terminal does not support shielding the foregoing available subchannel. The first value may be 1, and the second value may be 0.

A second bit (for example, B83) in the first field corresponds to a secondary 20 MHz channel on the primary 40 MHz channel on the primary 80 MHz channel on the operating channel. When the second bit in the first field is a first value, it indicates that the terminal supports shielding the secondary 20 MHz channel on the primary 40 MHz channel on the primary 80 MHz channel; or when the second bit in the first field is a second value, it indicates that the terminal does not support shielding the foregoing available subchannel. The first value may be 1, and the second value may be 0.

A third bit (for example, B84) in the first field corresponds to a 1^{st} secondary 20 MHz channel on a secondary 40 MHz channel on the primary 80 MHz channel on the operating channel. When the third bit in the first field is a first value, it indicates that the terminal supports shielding the 1^{st} secondary 20 MHz channel on the secondary 40 MHz channel on the primary 80 MHz channel; or when the third bit in the first field is a second value, it indicates that the terminal does not support shielding the foregoing available subchannel. The first value may be 1, and the second value may be 0.

A fourth bit (for example, B85) in the first field corresponds to a 2^{nd} secondary 20 MHz channel on the secondary 40 MHz channel on the primary 80 MHz channel on the operating channel. When the fourth bit in the first field is a first value, it indicates that the terminal supports shielding the 2^{nd} secondary 20 MHz channel on the secondary 40 MHz channel on the primary 80 MHz channel; or when the fourth bit in the first field is a second value, it indicates that the terminal does not support shielding the foregoing available subchannel. The first value may be 1, and the second value may be 0.

A fifth bit (for example, B86) in the first field corresponds to a 1^{st} secondary 20 MHz channel on a 1^{st} secondary 40 MHz channel on a secondary 80 MHz channel on the operating channel. When the fifth bit in the first field is a first value, it indicates that the terminal supports shielding the 1^{st} secondary 20 MHz channel on the 1^{st} secondary 40 MHz channel on the secondary 80 MHz channel; or when the fifth bit in the first field is a second value, it indicates that the terminal does not support shielding the foregoing available subchannel. The first value may be 1, and the second value may be 0.

A sixth bit (for example, B87) in the first field corresponds to a 2^{nd} secondary 20 MHz channel on the 1^{st} secondary 40 MHz channel on the secondary 80 MHz channel on the operating channel. When the sixth bit in the first field is a first value, it indicates that the terminal supports shielding the 2^{nd} secondary 20 MHz channel on the 1^{st} secondary 40 MHz channel on the secondary 80 MHz channel; or when the sixth bit in the first field is a second value, it indicates that the terminal does not support shielding the foregoing available subchannel. The first value may be 1, and the second value may be 0.

A seventh bit (for example, B88) in the first field corresponds to a 1^{st} secondary 20 MHz channel on a 2^{nd} secondary 40 MHz channel on the secondary 80 MHz channel on the operating channel. When the seventh bit in the first field is a first value, it indicates that the terminal supports shielding the 1^{st} secondary 20 MHz channel on the 2^{nd} secondary 40 MHz channel on the secondary 80 MHz channel; or when the seventh bit in the first field is a second value, it indicates that the terminal does not support shielding the foregoing available subchannel. The first value may be 1, and the second value may be 0.

An eighth bit (for example, B89) in the first field corresponds to a 2^{nd} secondary 20 MHz channel on the 2^{nd} secondary 40 MHz channel on the secondary 80 MHz channel on the operating channel. When the eighth bit in the first field is a first value, it indicates that the terminal supports shielding the 2^{nd} secondary 20 MHz channel on the 2^{nd} secondary 40 MHz channel on the secondary 80 MHz channel; or when the eighth bit in the first field is a second value, it indicates that the terminal does not support shielding the foregoing available subchannel. The first value may be 1, and the second value may be 0.

In this embodiment, the terminal may determine a value of the corresponding bit in the first field based on the available subchannel that the terminal supports shielding, to generate the first signaling.

In a possible implementation, the first field further includes a first indication bit. The first indication bit is used to determine a first bandwidth granularity for dividing the operating channel for an available subchannel. To be compatible with different use scenarios and meet a requirement for an operating channel with a larger bandwidth in the future, the first field in the first signaling further includes the first indication bit, and the first indication bit may be B81 in the first signaling structure.

In a possible implementation, the first indication bit may be 1 bit. When the first indication bit is 1 bit, it indicates that the available subchannel may correspond to two first bandwidth granularities, for example, 40 MHz or 20 MHz. Certainly, based on an actual case, when the first indication bit may be a plurality of bits, for example, T bits, the available subchannel may correspond to 2^{T} first bandwidth granularities.

In a possible implementation, when the first indication bit is a first value, for example, B81 is set to 1, it indicates that the first bandwidth granularity of the available subchannel is 40 MHz, that is, a bandwidth of the operating channel is 320 MHz; or when the first indication bit is a second value, for example, B81 is set to 0, it indicates that the first bandwidth granularity of the available subchannel is 20 MHz, that is, a bandwidth of the operating channel is 160 MHz.

In this embodiment of this application, each bit in the first field indicates whether the terminal supports shielding the available subchannel corresponding to the bit, so that flexibility of shielding the available subchannel can be improved, and there is no need to bundle the subchannel that can be shielded to a corresponding radio channel mode, that is, the shielded available subchannels supported by the terminal are independent of each other, thereby improving flexibility of determining the puncturing pattern supported by the terminal.

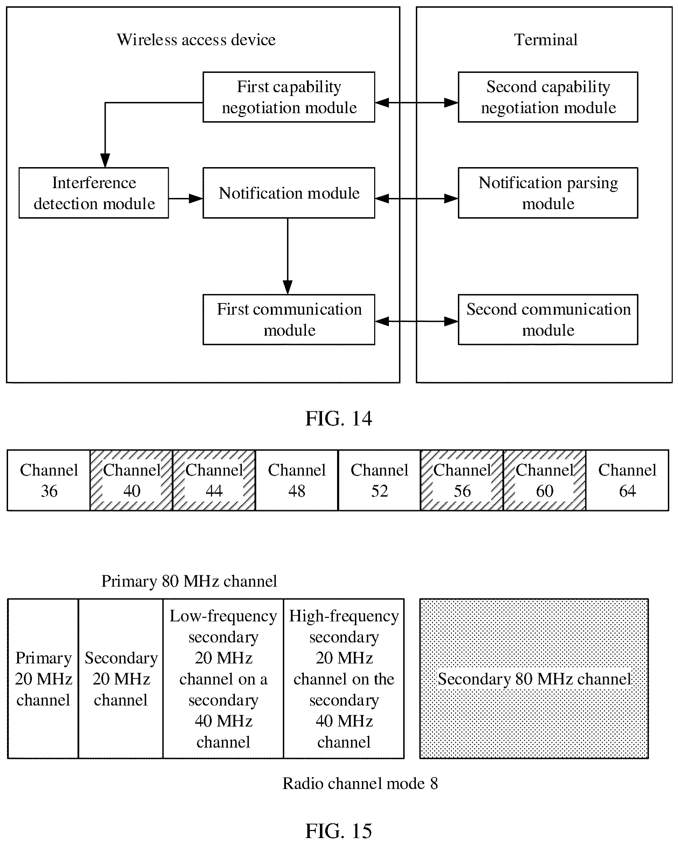

For example, FIG. 14 is a diagram of a structure of a wireless communication system according to another embodiment of this application. As shown in FIG. 14, the wireless communication system includes a wireless access device and a terminal. The wireless access device includes a plurality of modules, which are respectively a first capability negotiation module, an interference detection module, a notification module, and a first communication module. The terminal device includes a second capability negotiation module, a notification parsing module, and a second communication module. The terminal may generate first signaling through the second capability negotiation module, and send the first signaling to the wireless access device through the second capability negotiation module.

S902: The wireless access device determines, based on the received first signaling, a radio channel mode supported by the terminal.

In this embodiment, after receiving the first signaling sent by the terminal, the AP device may determine a location of a third field and a location of a first field based on a signaling structure of the first signaling, and separately read values of the foregoing two fields, to determine the radio channel mode supported by the terminal. A quantity of radio channel modes supported by the terminal may be determined based on values of bits in the foregoing two fields, and there may be zero, one, or more radio channel modes supported by the terminal. This may be specifically determined based on an actual case of the terminal. If the quantity of radio channel modes supported by the terminal is 0, it indicates that the terminal does not support a puncturing technology. In this case, a wireless communication connection may be established between the terminal and the AP device in a non-puncturing mode.

In a possible implementation, if the terminal generates the first signaling by using the foregoing solution 2, that is, each bit in the first field in the first signaling is used to determine whether an electronic device supports an available sub-bandwidth corresponding to the bit, because a shielding support status determined by using the first field covers the radio channel mode of the third field on the original first channel, if the first signaling carries the first field, the AP device may read only a value of each bit in the first field, that is, determine the radio channel mode supported by the terminal; or if the first signaling does not carry the first field, the AP device may determine, by reading the third field, the radio channel mode supported by the terminal. When the terminal determines the first field by using the foregoing solution 2, the third field is reserved to determine whether the original radio channel mode is supported, so that it can be ensured that the first signaling supports the original wireless communication protocol, and compatibility of the first signaling with the wireless communication protocol is improved.

Still refer to FIG. 14. The wireless access device may receive the first signaling through the first capability negotiation module, and parse the first signaling to determine the wireless communication mode supported by the terminal.

S903: If detecting that there is a subchannel subject to interference on the operating channel, the wireless access device determines a target channel mode based on the subchannel subject to interference and the radio channel mode supported by the terminal.

In this embodiment, the wireless access device may be configured with the interference detection module. As shown in FIG. 14, the interference detection module may determine whether there is the subchannel subject to interference on the operating channel of the AP device. If there is the subchannel subject to interference, it indicates that puncturing processing needs to be performed on the subchannel subject to interference by using the puncturing technology, that is, the subchannel subject to interference is shielded, and data transmission is not performed through the subchannel subject to interference, to improve an anti-interference capability in a process in which the AP device performs data transmission with the terminal.

In this embodiment, the AP device determines the subchannel subject to interference on the operating channel, to determine a target puncturing pattern, matches the target puncturing pattern with the puncturing pattern corresponding to the radio channel mode supported by the terminal, and determines the radio channel mode that matches the target puncturing pattern as the target channel mode.

In a possible implementation, if the AP device detects that there are two or more radio channel modes that match the target puncturing pattern, the AP device may select, from the plurality of matched radio channel modes, one with a largest bandwidth as the target puncturing pattern, so that a transmission rate can be increased as much as possible while the anti-interference capability in the process in which the AP device communicates with the terminal is ensured, thereby improving utilization of bandwidth resources.

For example, FIG. 15 is a diagram of selecting a target channel mode according to an embodiment of this application. The operating channel includes eight channels, a channel bandwidth of each channel is 20 MHz, and the channels are respectively a channel 36, a channel 40, a channel 44, a channel 48, a channel 52, a channel 56, a channel 60, and a channel 64.

The channel 36 to the channel 48 belong to a primary 80 MHz channel, the channel 36 and the channel 40 belong to a primary 40 MHz channel on primary 80 MHz, the channel 36 belongs to a primary channel on the primary 40 MHz channel on primary 80 MHz, and the channel 40 belongs to a secondary 20 channel on the primary 40 MHz channel on primary 80 MHz.

The channel 44 and the channel 48 belong to a secondary 40 MHz channel on primary 80 MHz, the channel 44 belongs to a low-frequency secondary 20 MHz channel (namely, secondary 40 MHz low) on the secondary 40 MHz channel on primary 80 MHz, and the channel 48 belongs to a high-frequency secondary 20 MHz channel (namely, secondary 40 MHz high) on the secondary 40 MHz channel on primary 80 MHz.

The channel 52, the channel 56, the channel 60, and the channel 64 belong to a secondary 80 MHz channel. The channel 52 and the channel 56 belong to a 1^{st} secondary 40 MHz channel on the secondary 80 MHz channel, the channel 52 belongs to a 1^{st} secondary 20 MHz channel on the 1^{st} secondary 40 MHz channel on the secondary 80 MHz channel, and the channel 56 belongs to a 2^{nd} secondary 20 MHz channel on the 1^{st} secondary 40 MHz channel on the secondary 80 MHz channel.

The channel 60 and the channel 64 belong to a 2^{nd} secondary 40 MHz channel on the secondary 80 MHz channel, the channel 52 belongs to a 1^{st} secondary 20 MHz channel on the 2^{nd} secondary 40 MHz channel on the secondary 80 MHz channel, and the channel 56 belongs to a 2^{nd} secondary 20 MHz channel on the 2^{nd} secondary 40 MHz channel on the secondary 80 MHz channel.

If the AP device detects that the channel 40, the channel 44, the channel 56, and the channel 60 are subchannels subject to interference, it indicates that puncturing needs to be performed on the foregoing four subchannels subject to interference, to obtain corresponding target puncturing patterns.

If the first signaling is generated in Manner 1, the AP device may determine all radio channel modes supported by the terminal. If the terminal supports a radio channel mode 1 to a radio channel mode 8, the AP device may determine that a puncturing pattern corresponding to the radio channel mode 8 matches the target puncturing pattern. Therefore, the radio channel mode 8 may be used as the target channel mode.

If the first signaling is generated in Manner 2, after determining each subchannel subject to interference, the AP device may determine whether the terminal supports shielding the subchannel subject to interference. If the terminal supports shielding all subchannels on the operating channel, the terminal may shield the detected subchannel subject to interference, and therefore may puncture the subchannel subject to interference, to determine the corresponding target channel mode.

S904: The wireless access device sends second signaling to the terminal, where the second signaling includes a second field, a target channel mode is indicated by using the second field, the second signaling indicates the terminal to use the target channel mode when the wireless access device sends a packet, the second signaling is sent when it is detected that there is a subchannel subject to interference on an operating channel, and the target channel mode is a mode in the radio channel mode supported by the terminal.

In this embodiment, to use a same radio channel mode (namely, the determined target channel mode) when the terminal sends the returned packet to the AP device, the AP device may generate the corresponding second signaling based on the target channel mode, and send the second signaling to the terminal device. The second signaling includes the second field, and the second field indicates the target channel mode used in a process in which the AP device performs wireless communication with the terminal.

Still refer to FIG. 14. The wireless access device may send the second signaling through the notification module, and the terminal may parse the second signaling through the notification parsing module, extract the second field from the second signaling, and determine the target channel mode.

In a possible implementation, the second signaling may be specifically a preamble puncturing action (Preamble Puncturing Action) frame. The preamble puncturing action frame is a frame newly added in a process of establishing wireless communication between the AP device and the terminal in the wireless communication method provided in this embodiment of this application, to constrain the radio channel mode used for the returned packet of the terminal, and keep the same radio channel mode used when the AP device and the terminal send the packet, that is, use the foregoing target communication mode.

Corresponding to S901, the foregoing manner of generating the second field may be specifically divided into two manners based on different manners used by the first field in the first signaling. Specific descriptions are as follows:
Manner 1: If the first field in the first signaling records the supported radio channel mode, the second field in the second signaling is determined based on a correspondence between each radio channel mode and a preset value.

In this embodiment, the AP device may store the correspondence between the radio channel mode and the preset value. The AP device may determine, by querying the foregoing correspondence, a preset value corresponding to the target channel mode, and generate the second field based on the second value, so that the terminal can determine the target channel mode currently used based on the value of the second field.

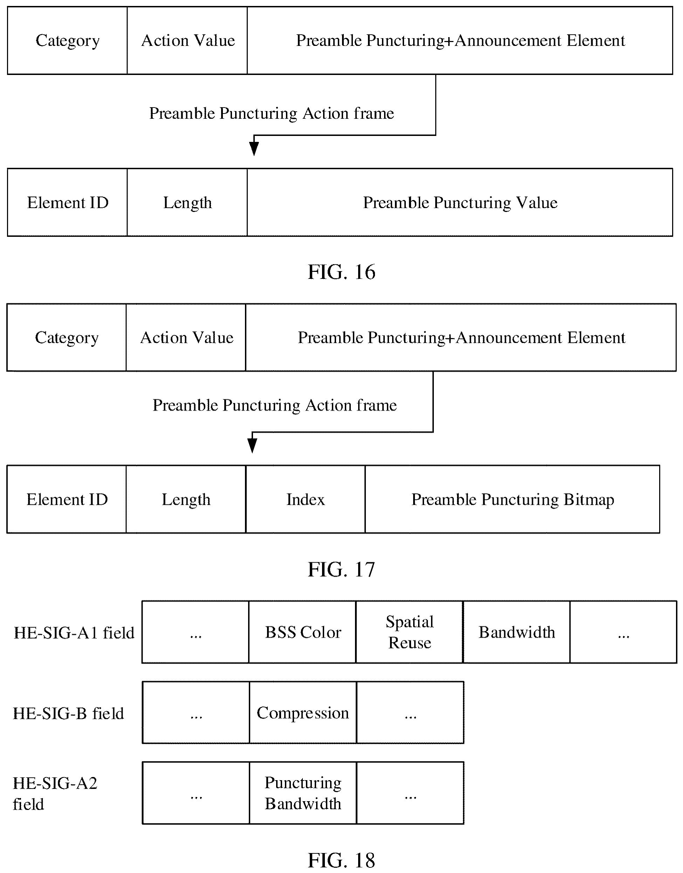

For example, FIG. 16 is a diagram of a structure of second signaling according to an embodiment of this application. Refer to FIG. 16. The second signaling is specifically a preamble puncturing action frame. The frame includes a plurality of fields, and includes at least a category (Category) field, an action value (Action Value) field, and a preamble puncturing+announcement element (Preamble Puncturing+Announcement Element) field. The preamble puncturing+announcement element field specifically includes an element identifier (Element ID) field, a length (Length) field, and a preamble puncturing value (Preamble Puncturing Value) field. The preamble puncturing value field is the foregoing second field, and the preset value corresponding to the target channel mode is recorded by using the second field, to indicate that the target channel mode is used during current wireless communication.

If the used target channel mode is the first channel mode (namely, the extended radio channel mode) in the first channel mode set, the value of the second field is within a first numerical range. If the used target channel mode is the second channel mode (namely, the original radio channel mode) in the second channel mode set, the value of the second field is within a second numerical range.

For example, a correspondence between the radio channel mode and the preset value is described as follows:
Radio channel mode 5: When the second field in the second signaling is a third value, it indicates that the target channel mode is puncturing an 80 MHz operating channel, punctured channels are a secondary 20 MHz channel on a primary 40 MHz channel and any 20 MHz channel on a secondary 40 MHz channel, and the third value may be 4.

Radio channel mode 6: When the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, P is any integer in 0 to 3, and the fourth value may be 5.

Radio channel mode 7: When the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, R is any integer in 0 to 3, and the fifth value may be 6.

Radio channel mode 8: When the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, M is any integer in 0 to 3, and the sixth value may be 7.

That is, when the first numerical range is 4 to 7, and the value in the second field is between 4 to 7, it indicates that the AP device uses the extended radio channel mode when performing wireless communication with the terminal.

Radio channel mode 1: When the second field is a seventh value, it indicates that the target channel mode is puncturing an 80 MHz operating channel, punctured channels are a secondary 20 MHz channel on a primary 40 MHz channel, and the seventh value may be 0.

Radio channel mode 2: When the second field is an eighth value, it indicates that the target channel mode is puncturing an 80 MHz operating channel, punctured channels are any 20 MHz channel on a secondary 40 MHz channel, and the eighth value may be 1.

Radio channel mode 3: When the second field is a ninth value, it indicates that the target channel mode is puncturing a 160 MHz operating channel, and punctured channels are a secondary 20 MHz channel on a primary 40 MHz channel on a primary 80 MHz and 0 to 2 secondary 20 MHz channels on a secondary 80 MHz channel; and when there are two punctured secondary 20 MHz channels on the secondary 80 MHz channel, the punctured channels are first two 20 MHz subchannels or last two 20 MHz subchannels on the secondary 80 MHz channel, and the ninth value may be 2.

Radio channel mode 4: When the second field is a tenth value, it indicates that the target channel mode is puncturing a 160 MHz operating channel, and punctured channels are any 0 to 2 secondary 20 MHz channels on a secondary 40 MHz channel on a primary 80 MHz channel and 0 to 2 secondary 20 MHz channels on a secondary 80 MHz channel; and when there are two punctured secondary 20 MHz channels on the secondary 80 MHz channel, the punctured channels are first two 20 MHz subchannels or last two 20 MHz subchannels on the secondary 80 MHz channel, and the tenth value may be 3.

That is, when the first numerical range is 0 to 3, and the value in the second field is between 0 to 3, it indicates that the AP device uses the original radio channel mode when performing wireless communication with the terminal.

For example, FIG. 15 is still used as an example for description. When the AP device detects that a channel 40, a channel 44, a channel 56, and a channel 60 are subchannels subject to interference, the target channel mode is the radio channel mode 8. Therefore, a preset value corresponding to the radio channel mode 8 is 7, and the second field in the second signaling may be set to 7, to indicate to use the radio channel mode 8 to perform wireless communication.

It should be noted that there are a plurality of puncturing patterns in some wireless communication modes, for example, the radio channel mode 5 to the radio channel mode 8, and the AP device may use any one of the puncturing patterns in the wireless communication modes as the target communication mode. In this case, after receiving the second signaling, the terminal determines the to-be-used target channel mode based on the second field in the second signaling. If the target channel mode corresponds to the plurality of puncturing patterns, one of the plurality of puncturing patterns may be selected as the target channel mode.

In this embodiment of this application, the preset value corresponding to the target channel mode is carried in the second field in the second signaling, so that when the AP device performs wireless communication with the terminal, a same target channel mode is used, and a channel mode used by the terminal to return a packet can be constrained, thereby improving an anti-interference capability of the returned packet.

Manner 2: If the first field in the first signaling indicates that the terminal supports a shielded available subchannel, the second field in the second signaling is used to determine a shielding case of each available subchannel in the target channel mode.

In this embodiment, the AP device may determine the shielding case corresponding to each available subchannel in the target channel mode, and puncture an interfering subchannel, and a non-interfering subchannel is used for data transmission. The second field in the second signaling includes a plurality of bits, and each bit corresponds to one available subchannel. For example, if the operating channel includes N available subchannels, the second field includes N bits. When the AP device detects that a specific available subchannel is a subchannel subject to interference, it indicates that the available subchannel in the target channel mode is a punctured channel, a bit corresponding to the punctured channel in the second field needs to be set to a first value, and a bit corresponding to another non-punctured channel in the second field is set to a second value. The first value may be 1, and the second value may be 0. Certainly, the first value and the second value may alternatively be set to other values based on an actual case.

In a possible implementation, if the first field includes a first indication bit, the second field further includes a second indication bit, and the second indication bit is used to determine a second bandwidth granularity of the available subchannels in the target channel mode. A value of the second indication bit is the same as a value of the first indication bit. When the first indication bit is the first value, it indicates that a first bandwidth granularity is 40 MHz, and the second indication bit also corresponds to the first value, which also indicates that a bandwidth granularity in the target channel mode is 40 MHz. When the first indication bit is the second value, it indicates that a first bandwidth granularity is 20 MHz, and the second indication bit also corresponds to the second value, which also indicates that a bandwidth granularity in the target channel mode is 20 MHz.

For example, FIG. 17 is a diagram of a structure of second signaling according to another embodiment of this application. As shown in FIG. 17, in comparison with the structure of the second signaling shown in FIG. 16, a preamble puncturing+announcement element (Preamble Puncturing+Announcement Element) field in the second signaling in this embodiment of this application further includes a second indication bit (Index), and the preamble puncturing value field is changed to a preamble puncturing bitmap (Preamble Puncturing Bitmap) field. The foregoing preamble puncturing+announcement element field is the foregoing second field.

For example, FIG. 15 is still used as an example for description. When the AP device detects that a channel 40, a channel 44, a channel 56, and a channel 60 are subchannels subject to interference, the foregoing four channels in the target channel mode are punctured channels, and the operating channel is a 160 MHz channel. That is, a channel granularity of each available subchannel is 20 MHz, and a corresponding second indication bit is set to the second value, for example, 0.

Bits corresponding to the channel 40, the channel 44, the channel 56, and the channel 60 are set to the second value. For example, the second value is 0. Bits corresponding to a channel 36, a channel 48, a channel 52, and a channel 64 are set to the first value. For example, the first value is 1. In this case, the foregoing preamble puncturing bitmap field is set to 10011001 (represented in binary), and a corresponding decimal value is 153.

In this embodiment of this application, the second field in the second signaling is used to determine a shielding case of each available subchannel in the target channel mode, so that accuracy of a puncturing pattern can be improved, the puncturing pattern of the target channel mode used by the AP is consistent with the puncturing pattern of the target channel mode used by the terminal, and the second field uniquely determines one puncturing pattern, thereby improving anti-interference capabilities of an uplink communication process and a downlink communication process.

Further, in another embodiment of this application, after S904, the method further includes the following steps.

S905: The wireless access device sends a first packet to the terminal, where the first packet is generated by the wireless access device based on the target channel mode.

Still refer to FIG. 14. The wireless access device may send the first packet through the first communication module.

S906: The terminal sends a second packet to the wireless access device, where the second packet is generated by the terminal based on the target communication mode.

Still refer to FIG. 14. The terminal may send the second packet through the second communication module.

In this embodiment, after determining the target channel mode, the AP device may indicate, by using the second signaling, the terminal to send the packet by using the same target channel mode. Therefore, when the AP device sends the first packet to the terminal, a preamble part of the first packet is generated based on the target channel mode. After receiving the first packet, the terminal may parse the first packet based on a parsing algorithm corresponding to the target channel mode. Correspondingly, when the terminal sends the second packet to the AP device, a preamble part of the second packet may also be generated based on the target channel mode. After receiving the second packet, the AP device may also parse the second packet based on the parsing algorithm corresponding to the target channel mode.

Manners of generating the first packet and the second packet based on the target channel mode also vary based on manners of generating the first signaling and the second signaling. Specific descriptions are as follows:
Manner 1: Values of fields, in the preamble parts of the first packet and the second packet, related to the radio channel mode are set based on the used target channel mode.

For example, FIG. 18 is a diagram of a structure of a preamble part of a packet between a wireless access device and a terminal according to an embodiment of this application. The packet includes a first packet and a second packet. The preamble part includes at least three fields: a high efficiency wireless local area network (High Efficiency, HE) signal A1 field, namely, an HE-SIG-A1 field. The field includes a base sub-system color (Base Sub-System Color, BSS Color) field, used to distinguish a BSS for packet sending. The field further includes a spatial reuse (Spatial Reuse) field, used to distinguish whether a packet is transmitted in a control reuse mode. The packet may be a protocol data unit (Presentation Protocol Data Unit, PPDU) packet. The foregoing field further includes a bandwidth field.

When the bandwidth (Bandwidth) field is 0, it indicates that the operating channel is a 20 MHz channel; when the bandwidth field is 1, it indicates that the operating channel is a 40 MHz channel; when the bandwidth field is 2, it indicates that the operating channel is an 80 MHz channel used in a non-puncturing mode; or when the bandwidth field is 3, it indicates a 160 MHz channel used in a non-puncturing mode.

When a compression (Compression) field in an HE-SIG-B field is 0, it indicates that communication is performed by using the radio channel mode using the puncturing technology. On this basis, when the bandwidth field is 4, it indicates that the target channel mode is a radio channel mode 1; when the bandwidth field is 5, it indicates that the target channel mode is a radio channel mode 2; when the bandwidth field is 6, it indicates that the target channel mode is a radio channel mode 3; or when the bandwidth field is 7, it indicates that the target channel mode is a radio channel mode 4.

To correspond to a newly extended radio channel mode, in addition to the HE-SIG-A1 field and the HE-SIG-B field, the preamble part of the packet further includes an HE-SIG-A2 field. The HE-SIG-A2 field includes a puncturing bandwidth (Puncturing Bandwidth) field, which is specifically two bits of the HE-SIG-A2 field: B20 and B21. Therefore, when the puncturing bandwidth field is 0, it indicates that the target channel mode is a radio channel mode 5; when the puncturing bandwidth field is 1, it indicates that the target channel mode is a radio channel mode 6; when the puncturing bandwidth field is 2, it indicates that the target channel mode is a radio channel mode 7; or when the bandwidth field is 3, it indicates that the target channel mode is a radio channel mode 5.

Manner 2: Values of fields, in the preamble parts of the first packet and the second packet, related to the radio channel mode are set based on shielding cases of the available subchannels in the used target channel mode.

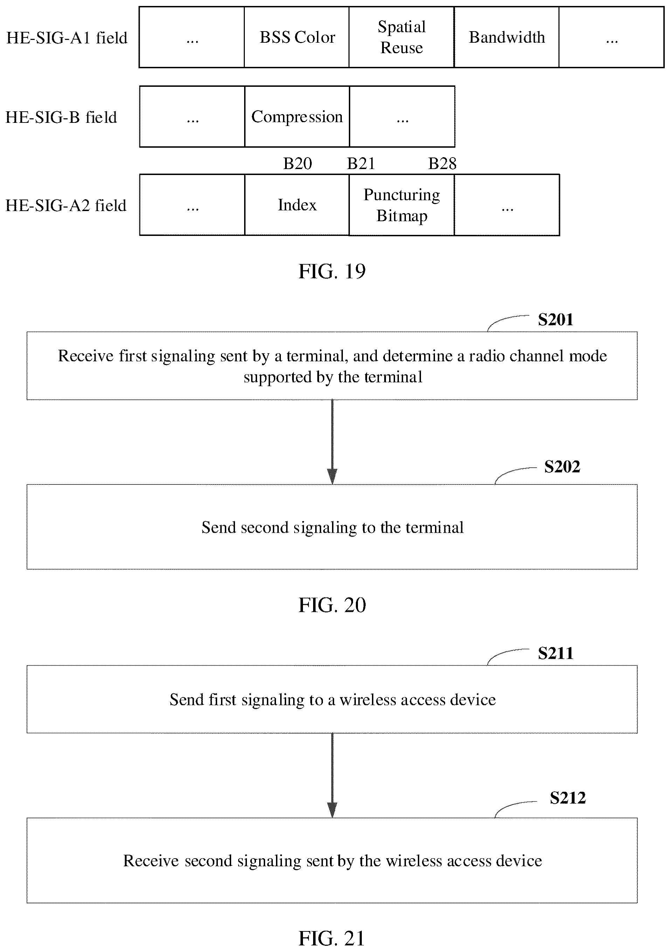

For example, FIG. 19 is a diagram of a structure of a preamble part of a packet between a wireless access device and a terminal according to another embodiment of this application. Similar to Manner 1, the preamble part of the packet (which includes the first packet and the second packet) generated in Manner 2 also includes three fields: an HE-SIG-A1 field, an HE-SIG-B field, and an HE-SIG-A2 field respectively. Parts of the HE-SIG-A1 field and the HE-SIG-B field are similar to those in Manner 1. For specific descriptions, refer to the foregoing related descriptions. Details are not described herein again. Different from Manner 1, in Manner 2, a plurality of bits B20 to B28 in HE-SIG-A2 are extended and used, to indicate the radio channel mode used by the packet, and determine the shielding cases corresponding to the available subchannels. B20 is a third indication bit (Index), and is used to determine a bandwidth granularity corresponding to the target channel mode. When the third indication bit is the first value, it indicates that the bandwidth granularity of the target channel mode is 40 MHz. When the third indication bit is the second value, it indicates that the bandwidth granularity of the target channel mode is 20 MHz. B21 to B28 are puncturing patterns (Puncturing Bitmaps), and a plurality of bits are used to indicate the shielding cases of the available subchannels on the corresponding operating channel. If the bit is the first value (for example, 1), it indicates that the available subchannel is a punctured channel; or if the bit is the second value (for example, 0), it indicates that the available subchannel is a non-punctured channel. For example, if the channel 40, the channel 44, the channel 56, and the channel 60 need to be shielded, B21 to B28 may be specifically 10011001 (represented in binary), and a corresponding decimal value is 153.

It can be learned from the foregoing that, according to the wireless communication method provided in this embodiment of this application, when the terminal establishes a wireless connection to the wireless access device, the terminal may send the first signaling to the wireless access device. The first signaling includes the first field. The radio channel mode supported by the terminal is determined by using the first field. The radio channel mode that can be supported is extended by using the first field, and a quantity of puncturing patterns is increased. When detecting that there is the subchannel subject to interference in a current communication scenario, the wireless access device may determine the subchannel subject to interference that needs to be shielded, and determine, from the radio channel mode supported by the terminal, the target channel mode in which the subchannel subject to interference is shielded. The wireless access device may send, to the terminal, the second signaling that is used to determine the target channel mode. When the packet is subsequently sent between the wireless access device and the terminal, data is transmitted by using the determined target channel mode, to effectively use a bandwidth resource on the operating channel. In comparison with an existing wireless communication technology, in this application, not only two bits specified in a frame structure are used to determine the target channel mode supported by the terminal, but also the first field and an original field are added to the first signaling to jointly determine the radio channel mode supported by the terminal. This increases a quantity of radio channel modes that can be defined, and increases a quantity of radio channel modes that are determined by using the first field, and scalability of a radio channel mode newly added in a subsequent wireless protocol development process can also be facilitated, thereby greatly improving flexibility and scalability of application of a puncturing technology, and expanding an application scope of the puncturing technology. In addition, after determining the target channel mode, the wireless access device may send the second signaling to the terminal, and indicate, by using the second signaling, that the terminal needs to use the target channel mode when the terminal sends the packet. Therefore, a channel mode of the terminal in an uplink transmission process is limited, thereby increasing a transmission rate and an anti-interference capability of packet sending in the uplink transmission process.

### Embodiment 2:

In comparison with Embodiment 1, in Embodiment 1, an implementation process of the wireless communication method is described from a perspective of interaction between the wireless access device and the terminal, and in the wireless communication method provided in this embodiment of this application, an implementation process of the wireless communication method is described on a wireless access device side. FIG. 20 is a flowchart of implementing a wireless communication method on a wireless access device side according to an embodiment of this application. Details are as follows:
S201: Receive first signaling sent by a terminal, and determine a radio channel mode supported by the terminal, where the first signaling includes a first field, and the first field indicates the radio channel mode supported by the terminal.
S202: Send second signaling to the terminal, where the second signaling includes a second field, a target channel mode is indicated by using the second field, the second signaling indicates the terminal to use the target channel mode when the terminal sends a packet, the second signaling is sent when it is detected that there is a subchannel subject to interference on an operating channel, and the target channel mode is a mode in the radio channel mode supported by the terminal.

Optionally, before the sending second signaling to the terminal, the method further includes:
an interference detection unit, configured to: if detecting that there is the subchannel subject to interference on the operating channel, determine the target channel mode based on the subchannel subject to interference and the radio channel mode supported by the terminal.

Optionally, the first signaling is a beacon frame, an association request frame, an association response frame, a probe request frame, or a probe response frame.

Optionally, the second signaling is a preamble puncturing action (Preamble Puncturing Action) frame.

Optionally, the second signaling indicates the wireless access device to use the target channel mode when the wireless access device sends a packet.

Optionally, the first signaling further includes a third field, the first field is used to determine a first channel mode set supported by the terminal, and the third field is used to determine a second channel mode set supported by the terminal.

Optionally, each bit in the first field corresponds to one first channel mode in the first channel mode set, and each bit in the third field corresponds to one second channel mode in the second channel mode set.

Optionally, the following is included:
When a first bit in the first field is a first value, it indicates that the terminal supports puncturing an 80 MHz operating channel, and punctured channels are a secondary 20 MHz channel on a primary 40 MHz channel and any 20 MHz channel on a secondary 40 MHz channel;
when a second bit in the first field is a first value, it indicates that the terminal supports puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when a third bit in the first field is a first value, it indicates that the terminal supports puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when a fourth bit in the first field is a first value, it indicates that the terminal supports puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3.

Optionally, the following is included:
When the second field in the second signaling is a first numerical range, it indicates that the target channel mode is a first channel mode in the first channel mode set; or
when the second field in the second signaling is a second numerical range, it indicates that the target channel mode is a second channel mode in the second channel set.

Optionally, the following is included:
When the second field in the second signaling is a third value, it indicates that the target channel mode is puncturing an 80 MHz operating channel, and punctured channels are a secondary 20 MHz channel on a primary 40 MHz channel and any 20 MHz channel on a secondary 40 MHz channel;
when the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3, where
the third value to the sixth value fall within the first numerical range.

Optionally, the operating channel includes N available subchannels, the first field includes N bits, each bit is used to determine whether the terminal supports shielding the available subchannel corresponding to the bit, and N is a positive integer greater than 2.

Optionally, when any bit in the first field is a first value, it indicates that the terminal supports shielding the available subchannel corresponding to the bit.

Optionally, the second field in the second signaling includes N bits, and each bit corresponds to one available subchannel on one operating channel; and
when a bit in the second field is a first value, it indicates that the available subchannel corresponding to the bit in the target channel mode is a non-punctured channel; or
when a bit in the second field is a second value, it indicates that the available subchannel corresponding to the bit in the target channel mode is a punctured channel.

Optionally, the first field further includes a first indication bit, and the first indication bit is used to determine a first bandwidth granularity for dividing the operating channel for an available subchannel.

Optionally, the following is included:
When the first indication bit is a first value, it indicates that the first bandwidth granularity is 40 MHz; or
when the first indication bit is a second value, it indicates that the first bandwidth granularity is 20 MHz.

Optionally, the second field further includes a second indication bit, and the second indication bit is used to determine a second bandwidth granularity of the available subchannel in the target channel mode.

Optionally, the following is included:
When the second indication bit is a first value, it indicates that the second bandwidth granularity is 40 MHz; or
when the second indication bit is a second value, it indicates that the second bandwidth granularity is 20 MHz.

Optionally, after the sending second signaling to the terminal, the method further includes:
sending a first packet to the terminal, where the first packet is generated based on the target communication mode; and/or
receiving a second packet sent by the terminal, where the second packet is generated by the terminal based on the target communication mode.

### Embodiment 3:

In comparison with Embodiment 1, in Embodiment 1, an implementation process of the wireless communication method is described from a perspective of interaction between the wireless access device and the terminal, and in the wireless communication method provided in this embodiment of this application, an implementation process of the wireless communication method is described on a terminal side. FIG. 21 is a flowchart of implementing a wireless communication method on a terminal side according to an embodiment of this application. Details are as follows:
S211: Send first signaling to a wireless access device, where the first signaling includes a first field, and the first field indicates a radio channel mode supported by the terminal.
S212: Receive second signaling sent by the wireless access device, where the second signaling includes a second field, a target channel mode is indicated by using the second field, the second signaling indicates the terminal to use the target channel mode when the terminal sends a packet, the second signaling is sent when the wireless access device detects that there is a subchannel subject to interference on an operating channel, and the target channel mode is a mode in the radio channel mode supported by the terminal.

Optionally, the first signaling is a beacon frame, an association request frame, an association response frame, a probe request frame, or a probe response frame.

Optionally, the second signaling is a preamble puncturing action (Preamble Puncturing Action) frame.

Optionally, the second signaling indicates the wireless access device to use the target channel mode when the wireless access device sends a packet.

Optionally, the first signaling further includes a third field, the first field is used to determine a first channel mode set supported by the terminal, and the third field is used to determine a second channel mode set supported by the terminal.

Optionally, each bit in the first field corresponds to one first channel mode in the first channel mode set, and each bit in the third field corresponds to one second channel mode in the second channel mode set.

Optionally, the following is included:
When a first bit in the first field is a first value, it indicates that puncturing of an 80 MHz operating channel is supported, and punctured channels are a secondary 20 MHz channel on a primary 40 MHz channel and any 20 MHz channel on a secondary 40 MHz channel;
when a second bit in the first field is a first value, it indicates that puncturing of a 160 MHz operating channel is supported, punctured channels are a secondary 20 MHz channel on a primary 40 MHz channel on a primary 80 MHz channel and P 20 MHz channels on a secondary 80 MHz channel, and P is any integer in 0 to 3;
when a third bit in the first field is a first value, it indicates that puncturing of a 160 MHz operating channel is supported, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when a fourth bit in the first field is a first value, it indicates that puncturing of a 160 MHz operating channel is supported, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3.

Optionally, the following is included:
When the second field in the second signaling is a first numerical range, it indicates that the target channel mode is a first channel mode in the first channel mode set; or
when the second field in the second signaling is a second numerical range, it indicates that the target channel mode is a second channel mode in the second channel set.

Optionally, the following is included:
When the second field in the second signaling is a third value, it indicates that the target channel mode is puncturing an 80 MHz operating channel, and punctured channels are a secondary 20 MHz channel on a primary 40 MHz channel and any 20 MHz channel on a secondary 40 MHz channel;
when the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3, where
the third value to the sixth value fall within the first numerical range.

Optionally, the operating channel includes N available subchannels, the first field includes N bits, each bit is used to determine whether the terminal supports shielding the available subchannel corresponding to the bit, and N is a positive integer greater than 2.

Optionally, when any bit in the first field is a first value, it indicates that the terminal supports shielding the available subchannel corresponding to the bit.

Optionally, the second field in the second signaling includes N bits, and each bit corresponds to one available subchannel on one operating channel; and
when a bit in the second field is a first value, it indicates that the available subchannel corresponding to the bit in the target channel mode is a non-punctured channel; or
when a bit in the second field is a second value, it indicates that the available subchannel corresponding to the bit in the target channel mode is a punctured channel.

Optionally, the first field further includes a first indication bit, and the first indication bit is used to determine a first bandwidth granularity for dividing the operating channel for an available subchannel.

Optionally, the following is included:
When the first indication bit is a first value, it indicates that the first bandwidth granularity is 40 MHz; or
when the first indication bit is a second value, it indicates that the first bandwidth granularity is 20 MHz.

Optionally, the second field further includes a second indication bit, and the second indication bit is used to determine a second bandwidth granularity of the available subchannel in the target channel mode.

Optionally, the following is included:
When the second indication bit is a first value, it indicates that the second bandwidth granularity is 40 MHz; or
when the second indication bit is a second value, it indicates that the second bandwidth granularity is 20 MHz.

Optionally, after the establishing the wireless communication link based on the target channel mode in response to the second signaling, the method further includes:
receiving a first packet sent by the wireless access device, where the first packet is generated by the wireless access device based on the target communication mode; and/or
sending a second packet to the wireless access device, where the second packet is generated by the terminal based on the target communication mode.

### Embodiment 4:

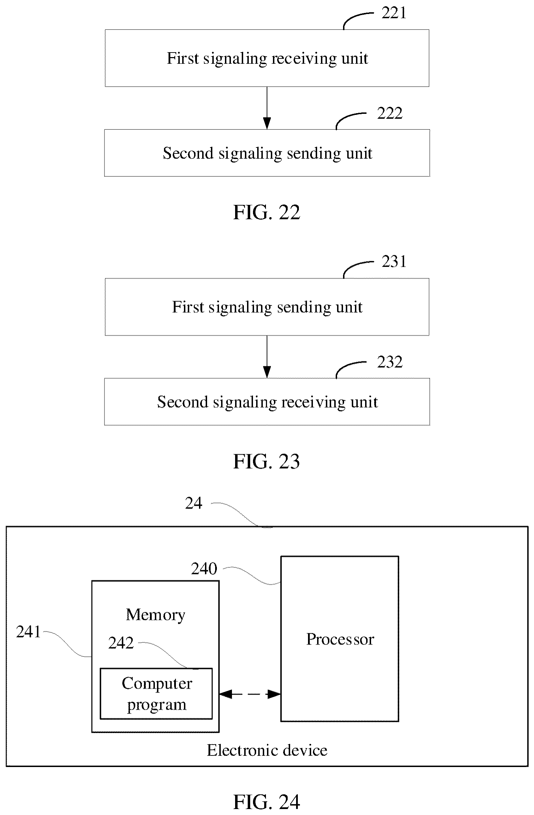

In correspondence to the wireless communication method described in Embodiment 2, FIG. 22 is a block diagram of a structure of a wireless communication apparatus according to an embodiment of this application. For ease of description, only a part related to this embodiment of this application is shown.

As shown in FIG. 22, the wireless communication apparatus includes:
a first signaling receiving unit 221, configured to receive first signaling sent by a terminal, and determine a radio channel mode supported by the terminal, where the first signaling includes a first field, and the first field indicates the radio channel mode supported by the terminal; and
a second signaling sending unit 222, configured to send second signaling to the terminal, where the second signaling includes a second field, a target channel mode is indicated by using the second field, the second signaling indicates the terminal to use the target channel mode when the terminal sends a packet, the second signaling is sent when it is detected that there is a subchannel subject to interference on an operating channel, and the target channel mode is a mode in the radio channel mode supported by the terminal.

Optionally, the wireless communication apparatus further includes:
an interference detection unit, configured to: if detecting that there is the subchannel subject to interference on the operating channel, determine the target channel mode based on the subchannel subject to interference and the radio channel mode supported by the terminal.

Optionally, the first signaling is a beacon frame, an association request frame, an association response frame, a probe request frame, or a probe response frame.

Optionally, the second signaling is a preamble puncturing action (Preamble Puncturing Action) frame.

Optionally, the second signaling indicates a wireless access device to use the target channel mode when the wireless access device sends a packet.

Optionally, the first signaling further includes a third field, the first field is used to determine a first channel mode set supported by the terminal, and the third field is used to determine a second channel mode set supported by the terminal.

Optionally, each bit in the first field corresponds to one first channel mode in the first channel mode set, and each bit in the third field corresponds to one second channel mode in the second channel mode set.

Optionally, the following is included:
When a first bit in the first field is a first value, it indicates that the terminal supports puncturing an 80 MHz operating channel, and punctured channels are a secondary 20 MHz channel on a primary 40 MHz channel and any 20 MHz channel on a secondary 40 MHz channel;
when a second bit in the first field is a first value, it indicates that the terminal supports puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when a third bit in the first field is a first value, it indicates that the terminal supports puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when a fourth bit in the first field is a first value, it indicates that the terminal supports puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3.

Optionally, the following is included:
When the second field in the second signaling is a first numerical range, it indicates that the target channel mode is a first channel mode in the first channel mode set; or
when the second field in the second signaling is a second numerical range, it indicates that the target channel mode is a second channel mode in the second channel set.

Optionally, the following is included:
When the second field in the second signaling is a third value, it indicates that the target channel mode is puncturing an 80 MHz operating channel, and punctured channels are a secondary 20 MHz channel on a primary 40 MHz channel and any 20 MHz channel on a secondary 40 MHz channel;
when the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3, where
the third value to the sixth value fall within the first numerical range.

Optionally, the operating channel includes N available subchannels, the first field includes N bits, each bit is used to determine whether the terminal supports shielding the available subchannel corresponding to the bit, and N is a positive integer greater than 2.

Optionally, when any bit in the first field is a first value, it indicates that the terminal supports shielding the available subchannel corresponding to the bit.

Optionally, the second field in the second signaling includes N bits, and each bit corresponds to one available subchannel on one operating channel; and
when a bit in the second field is a first value, it indicates that the available subchannel corresponding to the bit in the target channel mode is a non-punctured channel; or
when a bit in the second field is a second value, it indicates that the available subchannel corresponding to the bit in the target channel mode is a punctured channel.

Optionally, the first field further includes a first indication bit, and the first indication bit is used to determine a first bandwidth granularity for dividing the operating channel for an available subchannel.

### Embodiment 4:

In correspondence to the wireless communication method described in Embodiment 2, FIG. 23 is a block diagram of a structure of a wireless communication apparatus according to an embodiment of this application. For ease of description, only a part related to this embodiment of this application is shown.

As shown in FIG. 23, the wireless communication apparatus includes:
a first signaling sending unit 231, configured to send first signaling to a wireless access device, where the first signaling includes a first field, and the first field indicates a radio channel mode supported by a terminal; and
a second signaling receiving unit 232, configured to receive second signaling sent by the wireless access device, where the second signaling includes a second field, a target channel mode is indicated by using the second field, the second signaling indicates the terminal to use the target channel mode when the terminal sends a packet, the second signaling is sent when the wireless access device detects that there is a subchannel subject to interference on an operating channel, and the target channel mode is a mode in the radio channel mode supported by the terminal.

Optionally, the first signaling is a beacon frame, an association request frame, an association response frame, a probe request frame, or a probe response frame.

Optionally, the second signaling is a preamble puncturing action (Preamble Puncturing Action) frame.

Optionally, the second signaling indicates the wireless access device to use the target channel mode when the wireless access device sends a packet.

Optionally, the first signaling further includes a third field, the first field is used to determine a first channel mode set supported by the terminal, and the third field is used to determine a second channel mode set supported by the terminal.

Optionally, each bit in the first field corresponds to one first channel mode in the first channel mode set, and each bit in the third field corresponds to one second channel mode in the second channel mode set.

Optionally, the following is included:
When a first bit in the first field is a first value, it indicates that puncturing of an 80 MHz operating channel is supported, and punctured channels are a secondary 20 MHz channel on a primary 40 MHz channel and any 20 MHz channel on a secondary 40 MHz channel;
when a second bit in the first field is a first value, it indicates that puncturing of a 160 MHz operating channel is supported, punctured channels are a secondary 20 MHz channel on a primary 40 MHz channel on a primary 80 MHz channel and P 20 MHz channels on a secondary 80 MHz channel, and P is any integer in 0 to 3;
when a third bit in the first field is a first value, it indicates that puncturing of a 160 MHz operating channel is supported, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when a fourth bit in the first field is a first value, it indicates that puncturing of a 160 MHz operating channel is supported, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3.

Optionally, the following is included:
When the second field in the second signaling is a first numerical range, it indicates that the target channel mode is a first channel mode in the first channel mode set; or
when the second field in the second signaling is a second numerical range, it indicates that the target channel mode is a second channel mode in the second channel set.

Optionally, the following is included:
When the second field in the second signaling is a third value, it indicates that the target channel mode is puncturing an 80 MHz operating channel, and punctured channels are a secondary 20 MHz channel on a primary 40 MHz channel and any 20 MHz channel on a secondary 40 MHz channel;
when the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3, where
the third value to the sixth value fall within the first numerical range.

Optionally, the operating channel includes N available subchannels, the first field includes N bits, each bit is used to determine whether the terminal supports shielding the available subchannel corresponding to the bit, and N is a positive integer greater than 2.

Optionally, when any bit in the first field is a first value, it indicates that the terminal supports shielding the available subchannel corresponding to the bit.

Optionally, the second field in the second signaling includes N bits, and each bit corresponds to one available subchannel on one operating channel; and
when a bit in the second field is a first value, it indicates that the available subchannel corresponding to the bit in the target channel mode is a non-punctured channel; or
when a bit in the second field is a second value, it indicates that the available subchannel corresponding to the bit in the target channel mode is a punctured channel.

Optionally, the first field further includes a first indication bit, and the first indication bit is used to determine a first bandwidth granularity for dividing the operating channel for an available subchannel.

Optionally, the following is included:
When the first indication bit is a first value, it indicates that the first bandwidth granularity is 40 MHz; or
when the first indication bit is a second value, it indicates that the first bandwidth granularity is 20 MHz.

Optionally, the second field further includes a second indication bit, and the second indication bit is used to determine a second bandwidth granularity of the available subchannel in the target channel mode.

Optionally, the following is included:
When the second indication bit is a first value, it indicates that the second bandwidth granularity is 40 MHz; or
when the second indication bit is a second value, it indicates that the second bandwidth granularity is 20 MHz.

Optionally, the wireless communication apparatus further includes:
a first packet receiving unit, configured to receive a first packet sent by the wireless access device, where the first packet is generated by the wireless access device based on the target communication mode; and/or
a second packet receiving unit, configured to send a second packet to the wireless access device, where the second packet is generated by the terminal based on the target communication mode.

FIG. 24 is a diagram of a structure of an electronic device according to an embodiment of this application. As shown in FIG. 24, the electronic device 24 in this embodiment includes: at least one processor 240 (where only one processor is shown in FIG. 24), a memory 241, and a computer program 242 that is stored in the memory 241 and that can be run on the at least one processor 240. When executing the computer program 242, the processor 240 implements the steps in any one of the foregoing wireless communication method embodiments.

The electronic device 24 may be a computing device, for example, a desktop computer, a notebook computer, a palmtop computer, and a cloud server. The electronic device may include but is not limited to the processor 240 and the memory 241. Persons skilled in the art may understand that FIG. 24 is merely an example of the electronic device 24, and does not constitute a limitation on the electronic device 24. The electronic device 24 may include more or fewer components than those shown in the figure, or may combine some components, or may have different components. For example, the electronic device 24 may further include an input/output device, a network access device, or the like.

The processor 240 may be a central processing unit (Central Processing Unit, CPU). The processor 240 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, a discrete hardware component, or the like. The general-purpose processor may be a microprocessor, or the processor may be any conventional processor or the like.

In some embodiments, the memory 241 may be an internal storage unit of the electronic device 24, for example, a hard disk or a memory of the electronic device 24. In some other embodiments, the memory 241 may alternatively be an external storage device of the electronic device 24, for example, a plug-in hard disk, a smart media card (Smart Media Card, SMC), a secure digital (Secure Digital, SD) card, or a flash card (Flash Card) that is disposed on the electronic device 24. Further, the memory 241 may include both an internal storage unit and an external storage device of the electronic device 24. The memory 241 is configured to store an operating system, an application program, a boot loader (Boot Loader), data, another program, and the like, for example, program code of the computer program. The memory 241 may be further configured to temporarily store data that has been output or is to be output.

It should be noted that, content such as information exchange and execution processes between the foregoing apparatuses/units are based on a same concept as those in the method embodiments of this application. For specific functions and brought technical effect of the foregoing apparatuses/units, refer to the method embodiments. Details are not described herein again.

Persons skilled in the art may clearly understand that, for the purpose of convenient and brief description, division into the foregoing functional units or modules is merely used as an example for description. During actual application, the foregoing functions may be allocated to different functional units or modules for implementation based on a requirement. In other words, an inner structure of the apparatus is divided into different functional units or modules, to implement all or some of the functions described above. The functional units or modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely for ease of distinguishing between the functional units or modules, but are not intended to limit the protection scope of this application. For a specific working process of the units or modules in the foregoing system, refer to a corresponding process in the method embodiments. Details are not described herein again.

An embodiment of this application further provides an electronic device. The electronic device includes: at least one processor, a memory, and a computer program that is stored in the memory and that can be run on the at least one processor. When executing the computer program, the processor implements the steps in any one of the foregoing method embodiments.

An embodiment of this application further provides a computer-readable storage medium. The computer-readable storage medium stores a computer program. When the computer program is executed by a processor, the processor can implement the steps in the foregoing method embodiments.

An embodiment of this application provides a computer program product. When the computer program product is run on a mobile terminal, the mobile terminal can implement the steps in the foregoing method embodiments.

When the integrated unit is implemented in the form of the software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the processor can implement the steps in the method embodiments. The computer program includes computer program code, and the computer program code may be in a source code form, an object code form, an executable file, an intermediate form, or the like. The computer-readable medium may include at least any entity or apparatus that can carry the computer program code to a photographing apparatus/electronic device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disk. In some jurisdictions, the computer-readable medium cannot be an electrical carrier signal or a telecommunication signal based on legislation and patent practices.

In the foregoing embodiments, the descriptions of each embodiment have respective focuses. For a part that is not described in detail or recorded in an embodiment, refer to related descriptions in other embodiments.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In embodiments provided in this application, it should be understood that the disclosed apparatus/network device and method may be implemented in other manners. For example, the described apparatus/network device embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A wireless communication method, applied to a wireless access device, and comprising:
receiving first signaling sent by a terminal, and determining a radio channel mode supported by the terminal, wherein the first signaling comprises a first field, and the first field indicates the radio channel mode supported by the terminal; and
sending second signaling to the terminal, wherein the second signaling comprises a second field, a target channel mode is indicated by using the second field, the second signaling indicates the terminal to use the target channel mode when the terminal sends a packet, the second signaling is sent when it is detected that there is a subchannel subject to interference on an operating channel, and the target channel mode is a mode in the radio channel mode supported by the terminal.

2. The wireless communication method according to claim 1, wherein the second signaling indicates the wireless access device to use the target channel mode when the wireless access device sends a packet.

3. The wireless communication method according to claim 1, wherein the first signaling further comprises a third field, the first field is used to determine a first channel mode set supported by the terminal, and the third field is used to determine a second channel mode set supported by the terminal.

4. The wireless communication method according to claim 3, wherein each bit in the first field corresponds to one first channel mode in the first channel mode set, and each bit in the third field corresponds to one second channel mode in the second channel mode set.

5. The wireless communication method according to claim 4, wherein
when a first bit in the first field is a first value, it indicates that the terminal supports puncturing an 80 MHz operating channel, and punctured channels are a secondary 20 MHz channel on a primary 40 MHz channel and any 20 MHz channel on a secondary 40 MHz channel;
when a second bit in the first field is a first value, it indicates that the terminal supports puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when a third bit in the first field is a first value, it indicates that the terminal supports puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when a fourth bit in the first field is a first value, it indicates that the terminal supports puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3.

6. The wireless communication method according to claim 3, wherein
when the second field in the second signaling is a first numerical range, it indicates that the target channel mode is a first channel mode in the first channel mode set; or
when the second field in the second signaling is a second numerical range, it indicates that the target channel mode is a second channel mode in the second channel set.

7. The wireless communication method according to claim 6, wherein
when the second field in the second signaling is a third value, it indicates that the target channel mode is puncturing an 80 MHz operating channel, and punctured channels are a secondary 20 MHz channel on a primary 40 MHz channel and any 20 MHz channel on a secondary 40 MHz channel;
when the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3, wherein
the third value to the sixth value fall within the first numerical range.

8. The wireless communication method according to claim 1, wherein the operating channel comprises N available subchannels, the first field comprises N bits, each bit is used to determine whether the terminal supports shielding the available subchannel corresponding to the bit, and N is a positive integer greater than 2.

9. The wireless communication method according to claim 8, wherein when any bit in the first field is a first value, it indicates that the terminal supports shielding the available subchannel corresponding to the bit.

10. The wireless communication method according to claim 8, wherein the second field in the second signaling comprises N bits, and each bit corresponds to one available subchannel on one operating channel; and
when a bit in the second field is a first value, it indicates that the available subchannel corresponding to the bit in the target channel mode is a non-punctured channel; or
when a bit in the second field is a second value, it indicates that the available subchannel corresponding to the bit in the target channel mode is a punctured channel.

11. The wireless communication method according to any one of claims 8 to 10, wherein the first field further comprises a first indication bit, and the first indication bit is used to determine a first bandwidth granularity for dividing the operating channel for an available subchannel.

12. The wireless communication method according to claim 11, wherein
when the first indication bit is a first value, it indicates that the first bandwidth granularity is 40 MHz; or
when the first indication bit is a second value, it indicates that the first bandwidth granularity is 20 MHz.

13. The wireless communication method according to claim 11, wherein the second field further comprises a second indication bit, and the second indication bit is used to determine a second bandwidth granularity of the available subchannel in the target channel mode.

14. The wireless communication method according to claim 13, wherein
when the second indication bit is a first value, it indicates that the second bandwidth granularity is 40 MHz; or
when the second indication bit is a second value, it indicates that the second bandwidth granularity is 20 MHz.

15. The wireless communication method according to any one of claims 1 to 14, wherein after the sending second signaling to the terminal, the method further comprises:
sending a first packet to the terminal, wherein the first packet is generated based on the target communication mode; and/or
receiving a second packet sent by the terminal, wherein the second packet is generated by the terminal based on the target communication mode.

16. A wireless communication method, applied to a terminal, and comprising:
sending first signaling to a wireless access device, wherein the first signaling comprises a first field, and the first field indicates a radio channel mode supported by the terminal; and
receiving second signaling sent by the wireless access device, wherein the second signaling comprises a second field, a target channel mode is indicated by using the second field, the second signaling indicates the terminal to use the target channel mode when the terminal sends a packet, the second signaling is sent when the wireless access device detects that there is a subchannel subject to interference on an operating channel, and the target channel mode is a mode in the radio channel mode supported by the terminal.

17. The wireless communication method according to claim 16, wherein the second signaling indicates the wireless access device to use the target channel mode when the wireless access device sends a packet.

18. The wireless communication method according to claim 16, wherein the first signaling further comprises a third field, the first field is used to determine a first channel mode set supported by the terminal, and the third field is used to determine a second channel mode set supported by the terminal.

19. The wireless communication method according to claim 18, wherein each bit in the first field corresponds to one first channel mode in the first channel mode set, and each bit in the third field corresponds to one second channel mode in the second channel mode set.

20. The wireless communication method according to claim 19, wherein
when a first bit in the first field is a first value, it indicates that puncturing of an 80 MHz operating channel is supported, and punctured channels are a secondary 20 MHz channel on a primary 40 MHz channel and any 20 MHz channel on a secondary 40 MHz channel;
when a second bit in the first field is a first value, it indicates that puncturing of a 160 MHz operating channel is supported, punctured channels are a secondary 20 MHz channel on a primary 40 MHz channel on a primary 80 MHz channel and P 20 MHz channels on a secondary 80 MHz channel, and P is any integer in 0 to 3;
when a third bit in the first field is a first value, it indicates that puncturing of a 160 MHz operating channel is supported, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when a fourth bit in the first field is a first value, it indicates that puncturing of a 160 MHz operating channel is supported, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3.

21. The wireless communication method according to claim 18, wherein
when the second field in the second signaling is a first numerical range, it indicates that the target channel mode is a first channel mode in the first channel mode set; or
when the second field in the second signaling is a second numerical range, it indicates that the target channel mode is a second channel mode in the second channel set.

22. The wireless communication method according to claim 21, wherein
when the second field in the second signaling is a third value, it indicates that the target channel mode is puncturing an 80 MHz operating channel, and punctured channels are a secondary 20 MHz channel on a primary 40 MHz channel and any 20 MHz channel on a secondary 40 MHz channel;
when the second field is a fourth value, it indicates that the target channel mode is puncturing a 160 MHz operating channel, punctured channels are a secondary 20 MHz channel on a primary 40 MHz channel on a primary 80 MHz channel and P 20 MHz channels on a secondary 80 MHz channel, and P is any integer in 0 to 3;
when the second field is a fifth value, it indicates that the target channel mode is puncturing a 160 MHz operating channel, punctured channels are Q 20 MHz channels on a secondary 40 MHz channel on primary 80 MHz and R 20 MHz channels on a secondary 80 MHz channel, Q is any integer in 0 to 2, and R is any integer in 0 to 3; or
when the second field is a sixth value, it indicates that the target channel mode is puncturing a 160 MHz operating channel, punctured channels are a secondary 20 MHz channel on a primary 40 MHz channel on a primary 80 MHz channel, any 20 MHz channel on a secondary 40 MHz channel on the primary 80 MHz channel, and M 20 MHz channels on a secondary 80 MHz channel, and M is any integer in 0 to 3, wherein
the third value to the sixth value fall within the first numerical range.

23. The wireless communication method according to claim 16, wherein the operating channel comprises N available subchannels, the first field comprises N bits, each bit is used to determine whether the terminal supports shielding the available subchannel corresponding to the bit, and N is a positive integer greater than 2.

24. The wireless communication method according to claim 23, wherein when any bit in the first field is a first value, it indicates that the terminal supports shielding the available subchannel corresponding to the bit.

25. The wireless communication method according to claim 23, wherein the second field in the second signaling comprises N bits, and each bit corresponds to one available subchannel on one operating channel; and
when a bit in the second field is a first value, it indicates that the available subchannel corresponding to the bit in the target channel mode is a non-punctured channel; or
when a bit in the second field is a second value, it indicates that the available subchannel corresponding to the bit in the target channel mode is a punctured channel.

26. The wireless communication method according to any one of claims 22 to 25, wherein the first field further comprises a first indication bit, and the first indication bit is used to determine a first bandwidth granularity for dividing the operating channel for an available subchannel.

27. The wireless communication method according to claim 26, wherein
when the first indication bit is a first value, it indicates that the first bandwidth granularity is 40 MHz; or
when the first indication bit is a second value, it indicates that the first bandwidth granularity is 20 MHz.

28. The wireless communication method according to claim 26, wherein the second field further comprises a second indication bit, and the second indication bit is used to determine a second bandwidth granularity of the available subchannel in the target channel mode.

29. The wireless communication method according to claim 28, wherein
when the second indication bit is a first value, it indicates that the second bandwidth granularity is 40 MHz; or
when the second indication bit is a second value, it indicates that the second bandwidth granularity is 20 MHz.

30. The wireless communication method according to any one of claims 16 to 29, wherein after the receiving second signaling sent by the wireless access device, the method further comprises:
receiving a first packet sent by the wireless access device, wherein the first packet is generated by the wireless access device based on the target communication mode; and/or
sending a second packet to the wireless access device, wherein the second packet is generated by the terminal based on the target communication mode.

31. An electronic device, wherein the electronic device comprises a memory, a processor, and a computer program that is stored in the memory and that can be run on the processor; and when executing the computer program, the processor implements the steps of the method according to any one of claims 1 to 30.

32. A computer-readable storage medium, wherein the computer-readable storage medium stores a computer program; and when the computer program is executed by a processor, the processor implements the steps of the method according to any one of claims 1 to 30.
